# EUROPEAN PATENT SPECIFICATION

(11) **EP 3 400 745 B1**
(45) Date of publication and mention of the grant of the patent: **02.10.2024**
(21) Application number: 17701402.4
(22) Date of filing: 06.01.2017
(51) Int. Cl.: H04L 27/26, H04W 74/0808, H04W 72/1268

(54) **METHOD AND APPARATUS OF LAA LTE UPLINK CHANNEL ACCESS FOR TRANSMISSION AND RECEPTION OF USER PLANE AND CONTROL PLANE DATA**
VERFAHREN UND VORRICHTUNG FÜR KANALZUGRIFF ZUR ÜBERTRAGUNG VON PUSCH- UND UL-STEUERUNG
PROCÉDÉ ET APPAREIL POUR ACCÈS À UN CANAL POUR LA TRANSMISSION DE COMMANDE DE CANAL PARTAGÉ DE LIAISON MONTANTE PHYSIQUE (PUSCH) ET DE LIAISON MONTANTE

(30) Priority: 06.01.2016 US 201662275454 P; 11.01.2016 US 201662277282 P; 13.01.2016 US 201662278328 P
(43) Date of publication of application: 14.11.2018
(73) Proprietor: Apple Inc., Cupertino, CA 95014 (US)
(72) Inventor: BHORKAR, Abhijeet, Fremont, California 94555 (US); KWON, Hwan-Joon, Santa Clara, California 95054 (US); YE, Qiaoyang, Fremont, California 94538 (US); JEON, Jeongho, San Jose, California 95118 (US); HAMIDI-SEPEHR, Fatemeh, Santa Clara, California 95054 (US)
(74) Representative: Lang, Johannes
(86) International application number: PCT/US2017/012630
(87) International publication number: WO 2017/120542

(56) References cited:
- US-A1- 2015 223 075
- US-A1- 2015 358 826
- INTEL CORPORATION: "Uplink transmission with LBT", vol. RAN WG2, no. Bratislava, Slovakia; 20150420 - 20150424, 19 April 2015 (2015-04-19), XP050936083, Retrieved from the Internet <URL:http://www.3gpp.org/ftp/Meetings_3GPP_SYNC/RAN2/Docs/> [retrieved on 20150419]
- ALCATEL-LUCENT SHANGHAI BELL ET AL: "UL LBT and DL/UL Frame Structure for LAA", vol. RAN WG1, no. Beijing, China; 20150825 - 20150828, 23 August 2015 (2015-08-23), XP051039505, Retrieved from the Internet <URL:http://www.3gpp.org/ftp/Meetings_3GPP_SYNC/RAN1/Docs/> [retrieved on 20150823]
- INTEL CORPORATION: "On the remaining details for UL LBT", vol. RAN WG1, no. St. Julian's, Malta; 20160215 - 20160219, 6 February 2016 (2016-02-06), XP051064183, Retrieved from the Internet <URL:http://www.3gpp.org/ftp/tsg_ran/WG1_RL1/TSGR1_84/Docs/> [retrieved on 20160206]

## Description

### BACKGROUND

A variety of wireless cellular communication systems have been implemented, including a 3rd Generation Partnership Project (3GPP) Universal Mobile Telecommunications System, a 3GPP Long-Term Evolution (LTE) system, and a 3GPP LTE-Advanced (LTE-A) system. Next-generation wireless cellular communication systems based upon LTE and LTE-A systems are being developed, such as a fifth generation (5G) wireless system / 5G mobile networks system. Next-generation wireless cellular communication systems may provide support for higher bandwidths in part by supporting Downlink (DL) transmission in unlicensed spectrum. Document INTEL CORPORATION: "Uplink transmission with LBT", 3GPP DRAFT; R2-151102, 9 April 2015 (2015-04-19), XP050936083, retrieved from the Internet: URL: http://www.3gpp.org/ftp/Meetings_3GPP_SYNC/RAN2/Docs/ [retrieved on 2015-04-19] pertains to some potential options for uplink transmission in the unlicensed carrier and RAN2 aspects on uplink LBT operation.

Document ALCATEL-LUCENT SHANGHAI BELL ET AL: "UL LBT and DL/UL Frame Structure for LAA" (2015-08-23) discloses another example of the prior art.

Document US 2015/358826 A1 discloses another example of the prior art.

Document US 2015/223075 A1 discloses another example of the prior art.

### Summary of the invention

The invention is defined by the appended claims. The dependent claims define advantageous embodiments.

### BRIEF DESCRIPTION OF THE DRAWINGS

The embodiments of the disclosure will be understood more fully from the detailed description given below and from the accompanying drawings of various embodiments of the disclosure. However, while the drawings are to aid in explanation and understanding, they are only an aid, and should not be taken to limit the disclosure to the specific embodiments depicted therein.
**Fig. 1** illustrates a scenario of Listen-Before-Talk (LBT) gaps within Uplink (UL) subframes, in accordance with some embodiments of the disclosure.
**Fig. 2** illustrates a scenario of LBT methods, in accordance with some embodiments of the disclosure.
**Fig. 3** illustrates a scenario of performing LBT, in accordance with some embodiments of the disclosure.
**Fig. 4** illustrates a scenario of a frame structure, in accordance with some embodiments of the disclosure.
**Fig. 5** illustrates a scenario of various cases of User Equipment (UE) performed LBT, in accordance with some embodiments of the disclosure.
**Fig. 6** illustrates a scenario of various cases of UL LBT, in accordance with some embodiments of the disclosure.
**Fig. 7** illustrates an Evolved Node B (eNB) and a UE, in accordance with some embodiments of the disclosure.
**Fig. 8** illustrates hardware processing circuitries for an eNB for LBT and starting position indication in contiguous UL subframe transmission, in accordance with some embodiments of the disclosure.
**Fig. 9** illustrates hardware processing circuitries for a UE for LBT and starting position indication in contiguous UL subframe transmission, in accordance with some embodiments of the disclosure.
**Fig. 10** illustrates hardware processing circuitries for a UE for channel access for transmission of Physical Uplink Shared Channel (PUSCH) and UL control, in accordance with some embodiments of the disclosure.
**Fig. 11** illustrates methods for an eNB for LBT and starting position indication in contiguous UL subframe transmission, in accordance with some embodiments of the disclosure.
**Fig. 12** illustrates methods for a UE for LBT and starting position indication in contiguous UL subframe transmission, in accordance with some embodiments of the disclosure.
**Fig. 13** illustrates methods for a UE for channel access for transmission of PUSCH and UL control, in accordance with some embodiments of the disclosure.
**Fig. 14** illustrates example components of a UE device, in accordance with some embodiments of the disclosure.

### DETAILED DESCRIPTION

A variety of wireless cellular communication systems have been implemented, including a 3rd Generation Partnership Project (3GPP) Universal Mobile Telecommunications System, a 3GPP Long-Term Evolution (LTE) system, and a 3GPP LTE-Advanced (LTE-A) system. Next-generation wireless cellular communication systems based upon LTE and LTE-A systems are being developed, such as a fifth generation (5G) wireless system / 5G mobile networks system.

The sizeable growth in wireless traffic has led to an urgent need of rate improvement. With mature physical layer designs, further improvements in spectral efficiency may be marginal. Meanwhile, a scarcity of licensed spectrum in low frequency bands may result in a deficit in data rate increases. Thus, there is increasing interest in the operation of LTE systems in unlicensed spectrum.

As a result, one major enhancement for LTE has been to enable its operation with focus on Downlink (DL) transmission in unlicensed spectrum via Licensed-Assisted Access (LAA), which may expand system bandwidths by utilizing a flexible carrier aggregation (CA) framework introduced for LTE-Advanced systems. Enhanced operation of LTE systems in unlicensed spectrum may be supported in future releases and 5G systems. LTE operation in unlicensed spectrum may include Uplink (UL) transmissions for CA based LAA systems, LTE operation in unlicensed spectrum via dual connectivity (DC), and/or standalone LTE operation systems in unlicensed spectrum.

In some embodiments, LTE-based technology may operate solely in unlicensed spectrum without requiring an "anchor" in licensed spectrum, such as in MulteFire^{™} technology by MulteFire Alliance of Fremont California, USA. Such operation may require little to no assistance from licensed-spectrum devices, and may be amenable to lean, self-contained network architectures suitable for neutral deployments where a wide variety of deployments can service a wide variety of devices. Standalone LTE operation in unlicensed spectrum may also combine performance benefits of LTE technology with a relative simplicity of Wi-Fi-like deployments. Standalone LTE operation may accordingly be a significantly important technology in meeting demands of ever-increasing wireless traffic.

An unlicensed frequency band of current interest is the 5 GHz band, which has wide spectrum with global common availability. The 5 GHz band in the US may be governed by Unlicensed National Information Infrastructure (U-NII) rules promulgated by the Federal Communications Commission (FCC). The main incumbent systems in the 5 GHz band are Wireless Local Area Networks (WLAN) systems, specifically those based on Institute of Electrical and Electronics Engineers (IEEE) 802.11 a/n/ac technologies.

Since WLAN systems may be deployed both by individuals and operators for carrier-grade access service and data offloading, care should be taken before deployment of competing systems. Listen-Before-Talk (LBT) may be employed in future LTE LAA systems to promote fair coexistence with incumbent systems (e.g., WLAN systems). LBT is a procedure whereby a radio transmitter may first sense a medium, then transmit if the medium is sensed to be idle.

Although LBT may generally be employed before transmissions in unlicensed spectrum, LBT may be skipped when multiple contiguous UL subframes are scheduled to the same set of UEs, and when the UEs have performed an LBT successfully in the preceding subframe (e.g., an LBT that determined the unlicensed spectrum to be idle). In various embodiments, transmissions over multiple contiguous subframes may be considered to be a continuous UL transmission burst.

If adjacent subframes are scheduled to different UEs, a system may be disposed to perform an LBT. Either the first symbol in a scheduled subframe or the last symbol of a preceding subframe may be punctured for performing an LBT. An eNB may indicate whether a puncturing is needed and/or whether an LBT should be performed for the UL subframes (via, e.g., common Physical Downlink Control Channel (PDCCH)).

Discussed herein are scenarios in which multiple contiguous UL subframes are scheduled to the same UEs. In some embodiments, an eNB may indicate (e.g., to one or more UEs) that puncturing and/or LBT should be performed for the first of the contiguous subframes. Also discussed herein are scenarios in which LBT is performed in the subframes other than the indicated first subframe when the LBT in the first subframe fails.

Note that an eNB may not know *a priori* whether an LBT at a first subframe among contiguous subframes has succeeded or not. Accordingly, also discussed herein are methods for an eNB to determine a starting position of received subframes.

In various frame structures, a DL burst may be preceded by a legacy LTE LBT. In addition, UL control signals may be dynamically transmitted via a short extended Physical Uplink Control Channel (short ePUCCH, or sPUCCH) or a long ePUCCH. As a result, also discussed herein are details of channel access procedures of various UL transmissions.

In the following description, numerous details are discussed to provide a more thorough explanation of embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct electrical, mechanical, or magnetic connection between the things that are connected, without any intermediary devices. The term "coupled" means either a direct electrical, mechanical, or magnetic connection between the things that are connected or an indirect connection through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The terms "substantially," "close," "approximately," "near," and "about" generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking, or in any other manner.

It is to be understood that the terms so used are interchangeable under appropriate circumstances such that the embodiments of the invention described herein are, for example, capable of operation in other orientations than those illustrated or otherwise described herein.

The terms "left," "right," "front," "back," "top," "bottom," "over," "under," and the like in the description and in the claims, if any, are used for descriptive purposes and not necessarily for describing permanent relative positions.

For purposes of the embodiments, the transistors in various circuits, modules, and logic blocks are Tunneling FETs (TFETs). Some transistors of various embodiments may comprise metal oxide semiconductor (MOS) transistors, which include drain, source, gate, and bulk terminals. The transistors may also include Tri-Gate and FinFET transistors, Gate All Around Cylindrical Transistors, Square Wire, or Rectangular Ribbon Transistors or other devices implementing transistor functionality like carbon nanotubes or spintronic devices. MOSFET symmetrical source and drain terminals i.e., are identical terminals and are interchangeably used here. A TFET device, on the other hand, has asymmetric Source and Drain terminals. Those skilled in the art will appreciate that other transistors, for example, Bi-polar junction transistors-BJT PNP/NPN, BiCMOS, CMOS, etc., may be used for some transistors without departing from the scope of the disclosure.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

In addition, for purposes of the present disclosure, the term "eNB" may refer to a legacy LTE capable Evolved Node-B (eNB), a Narrowband Internet-of-Things (NB-IoT) capable eNB, a Cellular Internet-of-Things (CIoT) capable eNB, a Machine-Type Communication (MTC) capable eNB, and/or another base station for a wireless communication system. For purposes of the present disclosure, the term "UE" may refer to a legacy LTE capable User Equipment (UE), an NB-IoT capable UE, a CIoT capable UE, an MTC capable UE, and/or another mobile equipment for a wireless communication system.

Various embodiments of eNBs and/or UEs discussed below may process one or more transmissions of various types. Some processing of a transmission may comprise demodulating, decoding, detecting, parsing, and/or otherwise handling a transmission that has been received. In some embodiments, an eNB or UE processing a transmission may determine or recognize the transmission's type and/or a condition associated with the transmission. For some embodiments, an eNB or UE processing a transmission may act in accordance with the transmission's type, and/or may act conditionally based upon the transmission's type. An eNB or UE processing a transmission may also recognize one or more values or fields of data carried by the transmission. Processing a transmission may comprise moving the transmission through one or more layers of a protocol stack (which may be implemented in, e.g., hardware and/or software-configured elements), such as by moving a transmission that has been received by an eNB or a UE through one or more layers of a protocol stack.

Various embodiments of eNBs and/or UEs discussed below may also generate one or more transmissions of various types. Some generating of a transmission may comprise modulating, encoding, formatting, assembling, and/or otherwise handling a transmission that is to be transmitted. In some embodiments, an eNB or UE generating a transmission may establish the transmission's type and/or a condition associated with the transmission. For some embodiments, an eNB or UE generating a transmission may act in accordance with the transmission's type, and/or may act conditionally based upon the transmission's type. An eNB or UE generating a transmission may also determine one or more values or fields of data carried by the transmission. Generating a transmission may comprise moving the transmission through one or more layers of a protocol stack (which may be implemented in, e.g., hardware and/or software-configured elements), such as by moving a transmission to be sent by an eNB or a UE through one or more layers of a protocol stack.

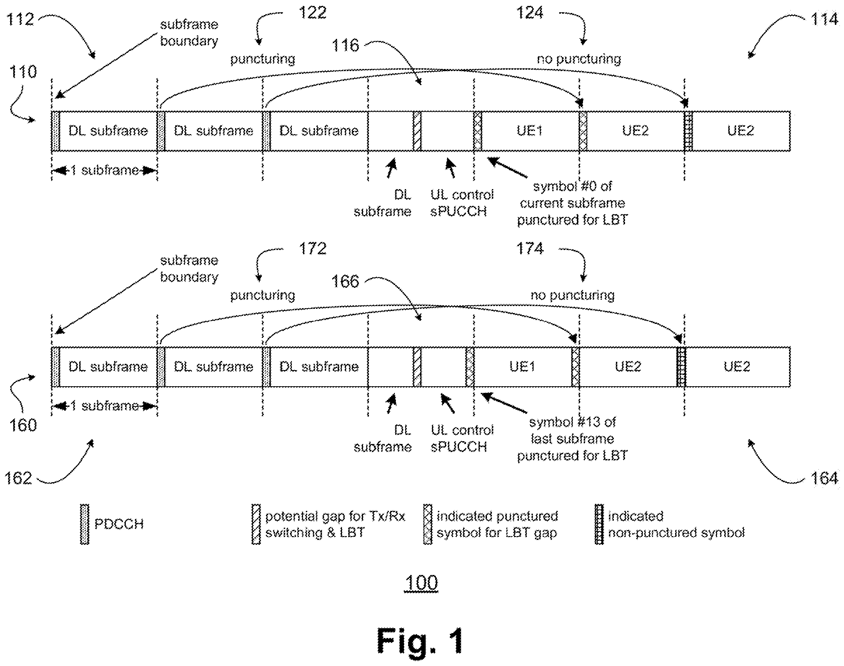

**Fig. 1** illustrates a scenario of Listen-Before-Talk (LBT) gaps within Uplink (UL) subframes, in accordance with some embodiments of the disclosure. A scenario 100 may comprise a first case 110 and a second case 160. In first case 110, an initial symbol (e.g., a symbol number 0) of a subframe scheduled for a UE for UL transmission (for, e.g., Physical Uplink Shared Channel (PUSCH) transmission) may be punctured for LBT. In second case 160, a last symbol (e.g., a symbol number 13) of a subframe previous to a subframe scheduled for a UE for UL transmission (for, e.g., PUSCH transmission) may be punctured for LBT.

First case 110 may comprise a set of DL subframes 112 (which may be transmitted by an eNB), a set of UL subframes 114 (which may be transmitted by one or more UEs), and a transition period 116 between DL subframes 112 and UL subframes 114. DL subframes 112 may carry PDCCH. Transition period 116 may comprise at least a portion of a DL subframe, followed by a potential gap for switching between transmission and reception and/or for LBT, followed by an sPUCCH (which may carry UL control).

One or more DL subframes 112 may carry PDCCH that comprise a first indication 122 and/or a second indication 124. In accordance with first indication 122, an initial symbol (e.g., a symbol number 0) of a UL subframe 114 may be indicated for a puncturing and/or for an LBT gap. In accordance with second indication 124, an initial symbol (e.g., a symbol number 0) of another UL subframe 114 may be indicated for no puncturing and/or for no LBT gap.

Second case 160 may comprise a set of DL subframes 162 (which may be transmitted by an eNB), a set of UL subframes 164 (which may be transmitted by one or more UEs), and a transition period 166 between DL subframes 162 and UL subframes 164. DL subframes 162 may carry PDCCH. Transition period 166 may comprise at least a portion of a DL subframe, followed by a potential gap for switching between transmission and reception and/or for LBT, followed by an sPUCCH (which may carry UL control).

One or more DL subframes 162 may carry PDCCH that comprise a first indication 172 and/or a second indication 174. In accordance with first indication 172, a last symbol (e.g., a symbol number 13) of a UL subframe 164 may be indicated for a puncturing and/or for an LBT gap. In accordance with second indication 174, a last symbol (e.g., a symbol number 0) of another UL subframe 164 subframe may be indicated for no puncturing and/or for no LBT gap.

According to the invention, when multiple contiguous UL subframes are scheduled to the same UEs, an eNB indicates to puncture the first symbol in the initial subframe of the contiguous subframes, or - in other examples not covered by the claims - the last symbol in a subframe preceding the contiguous subframes.

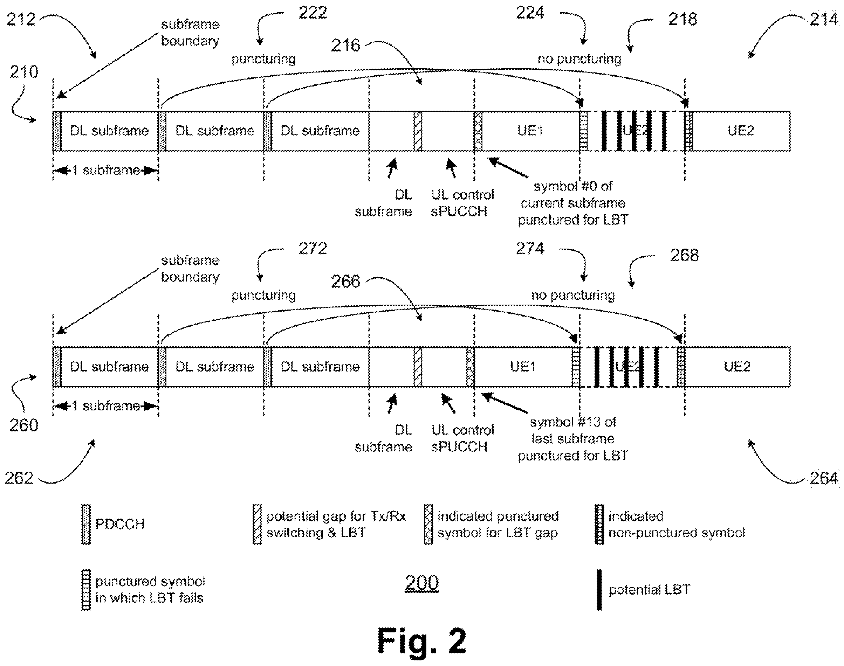

**Fig. 2** illustrates a scenario of LBT methods. A scenario 200 may comprise a first case 210 and a second case 260. In first case 210, according to the invention, an initial symbol (e.g., a symbol number 0) of a subframe scheduled for a UE for UL transmission (for, e.g., PUSCH transmission) is punctured for LBT. In second case 260 not covered by the claims, a last symbol (e.g., a symbol number 13) of a subframe previous to a subframe for a UE for UL transmission (for, e.g., PUSCH transmission) may be punctured for LBT.

First case 210 may comprise a set of DL subframes 212 (which may be transmitted by an eNB), a set of UL subframes 214 (which may be transmitted by one or more UEs), and a transition period 216 between DL subframes 212 and UL subframes 214. DL subframes 212 may carry PDCCH. Transition period 216 may comprise at least a portion of a DL subframe, followed by a potential gap for switching between transmission and reception and/or for LBT, followed by an sPUCCH (which may carry UL control).

One or more DL subframes 212 may carry PDCCH that comprise a first indication 222 and/or a second indication 224. In accordance with first indication 222, an initial symbol (e.g., a symbol number 0) of a UL subframe 214 is indicated for a puncturing and/or for an LBT gap. In accordance with second indication 224, an initial symbol (e.g., a symbol number 0) of another UL subframe 214 may be indicated for no puncturing and/or for no LBT gap.

In first case 210, an LBT due to first indication 222 has determined that the unlicensed spectrum was busy (e.g., the LBT failed). Subsequently, subframe 218 may comprise a plurality of time indices corresponding to potential opportunities for one or more subsequent LBTs.

Second case 260 may comprise a set of DL subframes 262 (which may be transmitted by an eNB), a set of UL subframes 264 (which may be transmitted by one or more UEs), and a transition period 266 between DL subframes 262 and UL subframes 264. DL subframes 262 may carry PDCCH. Transition period 266 may comprise at least a portion of a DL subframe, followed by a potential gap for switching between transmission and reception and/or for LBT, followed by an sPUCCH (which may carry UL control).

One or more DL subframes 262 may carry PDCCH that comprise a first indication 272 and/or a second indication 274. In accordance with first indication 272, a last symbol (e.g., a symbol number 13) of a UL subframe 264 may be indicated for a puncturing and/or for an LBT gap. In accordance with second indication 274, a last symbol (e.g., a symbol number 0) of another UL subframe 264 subframe may be indicated for no puncturing and/or for no LBT gap.

In second case 260, an LBT due to second indication 272 has determined that the unlicensed spectrum was busy (e.g., the LBT failed). Subsequently, subframe 268 may comprise a plurality of time indices corresponding to potential opportunities for one or more subsequent LBTs.

In various embodiments, a UE may adopt different LBT methods if an indicated LBT for transmission of a subframe within contiguous subframes fails (e.g., determines the unlicensed spectrum to be busy). In some embodiments, a no-puncturing and/or no-LBT indication from an eNB may be overridden by a UE, and puncturing and/or LBT may still be performed.

As depicted for example in Fig. 2, for some embodiments, after an LBT fails in a subframe preceding a subframe in which the UE is scheduled to transmit, LBT may be performed multiple times until it succeeds (e.g., the unlicensed spectrum is determined to be idle), or until the end of the contiguous UL subframes scheduled to the UE.

In some embodiments, if an end of a successful LBT and a following subframe boundary are not aligned, the UE may transmit a signal. For some such embodiments, the UE may transmit a reservation signal, or another useful signal such as a Sounding Reference Signal (SRS) or a Demodulation Reference Signal (DMRS). The signal may be transmitted within a duration between the successful LBT and the following subframe boundary. For some such embodiments, a reservation signal or another useful signal such as SRS or DMRS may not be transmitted within the duration between the successful LBT and the following subframe boundary.

In some embodiments, a number of LBT trials may be limited by a fixed parameter (e.g., a predetermined parameter), or by a configurable parameter.

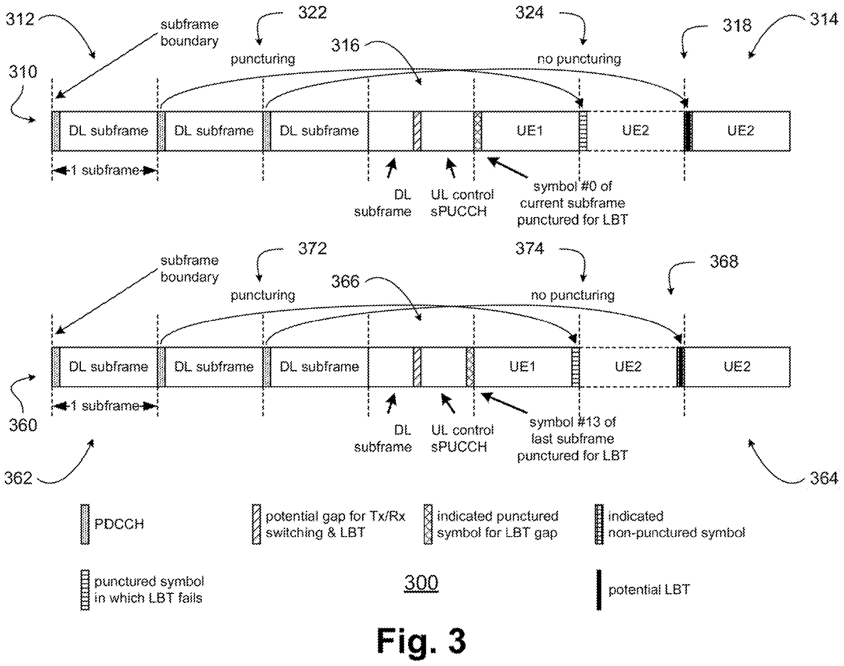

**Fig. 3** illustrates a scenario of performing LBT. A scenario 300 may comprise a first case 310 and a second case 360. In first case 310, an initial symbol (e.g., a symbol number 0) of a subframe scheduled for a UE for UL transmission (for, e.g., PUSCH transmission) is punctured for LBT. In second case 360 not covered by the claims, a last symbol (e.g., a symbol number 13) of a subframe previous to a subframe for a UE for UL transmission (for, e.g., PUSCH transmission) may be punctured for LBT.

First case 310 may comprise a set of DL subframes 312 (which may be transmitted by an eNB), a set of UL subframes 314 (which may be transmitted by one or more UEs), and a transition period 316 between DL subframes 312 and UL subframes 314. DL subframes 312 may carry PDCCH. Transition period 316 may comprise at least a portion of a DL subframe, followed by a potential gap for switching between transmission and reception and/or for LBT, followed by an sPUCCH (which may carry UL control).

One or more DL subframes 312 may carry PDCCH that comprise a first indication 322 and/or a second indication 324. In accordance with first indication 322, an initial symbol (e.g., a symbol number 0) of a UL subframe 314 is indicated for a puncturing and/or for an LBT gap. In accordance with second indication 324, an initial symbol 318 (e.g., a symbol number 0) of another UL subframe 314 may be indicated for no puncturing and/or for no LBT gap.

In first case 310, an LBT due to first indication 322 has determined that the unlicensed spectrum was busy (e.g., the LBT failed). Subsequently, a UE may treat first symbol 318 as a potential opportunity for an LBT.

Second case 360 may comprise a set of DL subframes 362 (which may be transmitted by an eNB), a set of UL subframes 364 (which may be transmitted by one or more UEs), and a transition period 366 between DL subframes 362 and UL subframes 364. DL subframes 362 may carry PDCCH. Transition period 366 may comprise at least a portion of a DL subframe, followed by a potential gap for switching between transmission and reception and/or for LBT, followed by an sPUCCH (which may carry UL control).

One or more DL subframes 362 may carry PDCCH that comprise a first indication 372 and/or a second indication 374. In accordance with first indication 372, a last symbol (e.g., a symbol number 13) of a UL subframe 364 may be indicated for a puncturing and/or for an LBT gap. In accordance with second indication 374, a last symbol 368 (e.g., a symbol number 0) of another UL subframe 264 subframe may be indicated for no puncturing and/or for no LBT gap.

In second case 360, an LBT due to first indication 372 has determined that the unlicensed spectrum was busy (e.g., the LBT failed). Subsequently, a UE may treat last symbol 368 as a potential opportunity for an LBT.

A UE may wait until a following subframe boundary, or until one symbol before a following subframe boundary, to perform LBT.

As discussed herein, an eNB may not know *a priori* whether an LBT at a first subframe among contiguous subframes has succeeded or not. If the LBT for the first subframe among contiguous subframes scheduled to the same UEs succeeds, the eNB knows the starting position of the first subframe, and the following subframes start from the first symbol. On the other hand, if the LBT for the first subframe among these contiguous subframes fails, LBT may be performed for the transmission in the following subframes, and the first symbol of the following subframes may be punctured for LBT.

In various embodiments, an eNB may employ different methods to determine a starting position of the subframes other than the first subframe. In some embodiments, blind detection may be used, and the eNB may perform a first hypothesis test and a second hypothesis test (which may respectively correspond to a case starting from a first symbol and a case starting from a second symbol).

For some embodiments, an eNB may employ DMRS-based detection. In some embodiments, a location of a DMRS may be changed to be the first symbol, or an additional DMRS may be transmitted in the first symbol of the UL subframe. The eNB may then detect the presence of DMRS in the first symbol to determine the starting position. In some embodiments, different DMRS sequences may be used to indicate the starting position.

In some embodiments, DMRS may be modulated with a phase shift to include one bit of information for the indication of starting symbol. For example, denoting the current DMRS to be x, then x may be transmitted if the subframe starts from the first symbol, while -x may be transmitted if the subframe starts from the second symbol. In some embodiments, a 180 degree shift may differentiate a phase shift corresponding to the first symbol from a phase shift corresponding to the second symbol.

In some embodiments, an eNB may rely on the presence of signal in a preceding subframe. If a transmission from the same UE in the preceding subframe is detected to be present, the eNB may assume the current subframe starts from the first symbol. Otherwise the eNB may assume the current subframe starts from the second symbol.

Note that an eNB may determine the starting position of a subframe based on the methods discussed herein, but the eNB may still not know if the UE transmits on the subframe or not. Additional signal presence detection may accordingly be performed, such as blind detection including hypothesis testing of whether or not the signal is transmitted, or DRMS based signal presence detection.

Moreover, in various embodiments, any combinations of the above methods are possible.

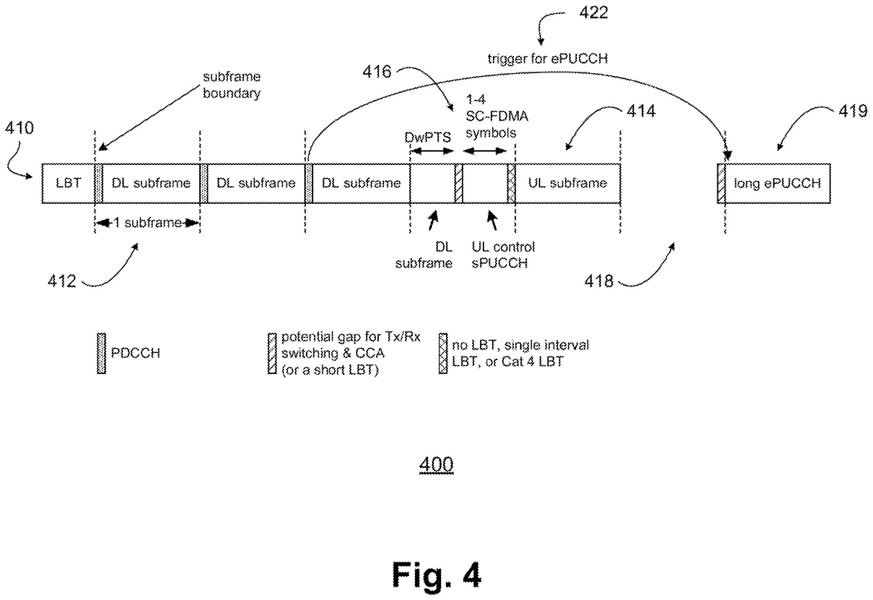

**Fig. 4** illustrates a scenario of a frame structure, in accordance with some embodiments of the disclosure. A scenario may comprise a set of subframes 410, which may in turn comprise a set of DL subframes 412 (which may be transmitted by an eNB), a set of UL subframes 414 (which may be transmitted by one or more UEs), and a transition period 416 between DL subframes 412 and UL subframes 414. Transition period 416 may comprise at least a portion of a DL subframe (which may span a Downlink Pilot Time Slot (DwPTS)), followed by a potential gap for switching between transmission and reception and Clear Channel Assessment (CCA) or a short LBT, followed by an sPUCCH (which may span between one and four Single Carrier Frequency Division Multiple Access (SC-FDMA) symbols).

One or more DL subframes 412 may carry PDCCH that comprise an indication 422. In accordance with indication 422, a long ePUCCH 419 may be triggered (potential gap for switching between transmission and reception and CCA or a short LBT). Long ePUCCH 419 may be triggered following a gap 418 after UL subframes 414.

Accordingly, a DL burst may be preceded by a regular LBT. UL control signals may be dynamically transmitted via an sPUCCH format consisting of the final n symbols of a subframe (which may be chose to be between one and four). The other symbols of the subframe before the n symbols (e.g., the first ten symbols in a fourteen-symbol subframe) may be used for transmissions other than UL transmission (e.g., DL subframe transmissions).

For some embodiments, UL control signals may be transmitted by a long ePUCCH, which may be triggered by an eNB, and which may be frequency domain multiplexed with PUSCH. In some embodiments, a transmitting node may be disposed to performing an LBT procedure.

In various embodiments, different options for LBT may be employed for UL control signals (for, e.g., sPUCCH transmission, long ePUCCH transmission, and/or SRS transmission). In some embodiments, if an sPUCCH transmission (or a long ePUCCH transmission, or an SRS transmission) occupies less than five percent of a duty cycle over 50 milliseconds (ms), LBT might not be considered according to regulations.

For some embodiments, an sPUCCH transmission (or a long ePUCCH transmission, or an SRS transmission) may be preceded by a short LBT (e.g., an LBT performed for duration of 25 microseconds (µs), or a single interval LBT) right before the transmission of sPUCCH. If the single interval LBT is not performed right before the sPUCCH transmission, then a reservation signal may be transmitted to align with the sPUCCH symbol boundary.

In some embodiments, the LBT procedure may be similar to an LBT for PUSCH (e.g. a Category 4 LBT).

Meanwhile, in order to avoid collisions with other ongoing transmissions, it may be advantageous for an SRS transmission from a UE to be preceded by an LBT unless the UE is already transmitting. In various embodiments, different methods of SRS transmission may be employed. In some embodiments, SRS may be transmitted in a last symbol of a UL subframe. An additional LBT may be desirable before the transmission of SRS unless the SRS-configured UEs are scheduled in the same uplink subframe and, thus, the SRS transmission immediately follows the PUSCH transmission.

For some embodiments, SRS may be transmitted in the first symbol of an uplink subframe. UEs configured for SRS transmission only, or for PUSCH transmission only, or for both SRS and PUSCH transmission may all perform LBT synchronously before the start of the UL subframe. UEs configured for PUSCH transmission without SRS transmission may send a reservation signal during a first symbol designated for SRS transmission. The reservation signal may be common to all UEs, and one particular cyclic shift version may be reserved and used for such purpose, so that the eNB may advantageously distinguish a reservation signal from valid SRS transmissions.

In some embodiments, SRS may be frequency-domain multiplexed with sPUCCH. LBT may be performed before the transmission of sPUCCH resources. As with SRS transmitted in the first symbol of an uplink subframe, a common reservation signal may be transmitted before transmission of PUSCH, which may advantageously avoid an additional LBT before transmission of PUSCH.

In self-scheduling cases, UL LBT may employ either a single CCA duration of at least 25 µs, including a defer duration of 16 µs followed by one CCA slot, and a maximum contention window size of 3, 4, 5, 6, or 7.

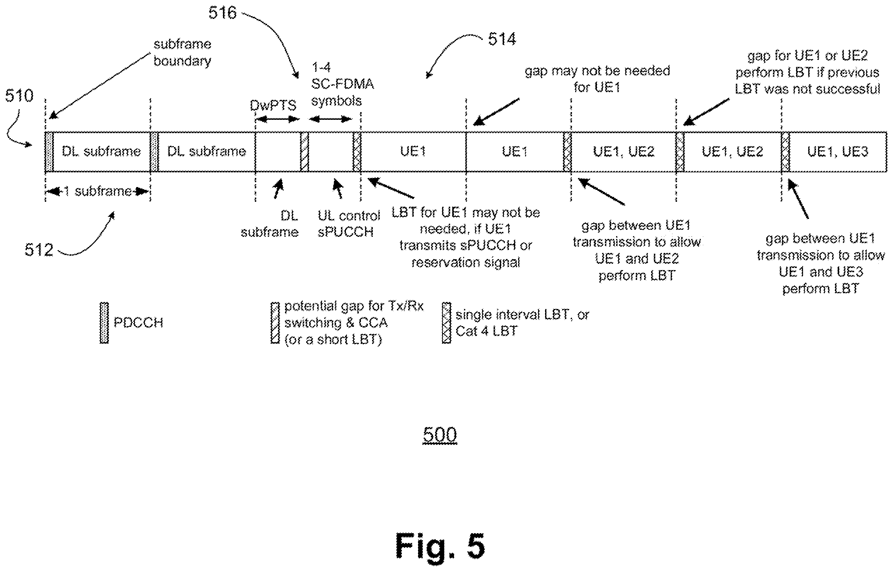

**Fig. 5** illustrates a scenario of various cases of User Equipment (UE) performed LBT, in accordance with some embodiments of the disclosure. A scenario may comprise a set of subframes 510, which may in turn comprise a set of DL subframes 512 (which may be transmitted by an eNB), a set of UL subframes 514 (which may be transmitted by one or more UEs), and a transition period 516 between DL subframes 512 and UL subframes 514. Transition period 516 may comprise at least a portion of a DL subframe (which may span a DwPTS), followed by a potential gap for switching between transmission and reception and CCA or a short LBT, followed by an sPUCCH (which may span between one and four SC-FDMA symbols).

A UE may accordingly be disposed to performing LBT under various conditions. In some embodiments, an eNB may explicitly indicate whether a UE may skip LBT before transmission of PUSCH. For some embodiments, LBT may not be needed if a UE has transmitted a reservation signal or sPUCCH (e.g., in transition period 516). In some embodiments, LBT may not be needed if a UE has transmitted in an immediately previous subframe.

Although a UE may be disposed to performing LBT before any transmission in principle, a UE may skip performing LBT in some situations as illustrated in **Fig. 5****.** In such cases, an eNB may explicitly indicate whether the UE may skip performing LBT before transmission of PUSCH.

In various situations, one or more UEs configured for sPUCCH transmissions may implicitly infer whether skipping LBT is allowed. If the UEs are also scheduled to transmit PUSCH in a following uplink subframe, the UEs may not need to perform an additional LBT before the transmission of PUSCH if an LBT has successfully finished before transmission of sPUCCH. However, if an LBT requirement for the PUSCH is more strict than an LBT requirement for the sPUCCH transmission, the UEs may perform LBT required for PUSCH transmission before sPUCCH.

For some embodiments, it is possible that a UE may be configured for sPUCCH transmission, but may skip the sPUCCH transmission due to the failure of LBT. Nevertheless, the UE may still attempt the following PUSCH transmission. In this case, a gap may be placed between the sPUCCH and PUSCH transmissions for LBT.

In some embodiments, a gap between sPUCCH and PUSCH may be avoided by transmitting a reservation signal on an interlace of sPUCCH. A common dedicated sPUCCH format (e.g., format 1) or an SRS sequence that is multiplexed with sPUCCH may be pre-allocated as a reservation signal. A fixed Orthogonal Cover Code (OCC) and cyclic shift of a base sequence can be used as reservation signal. The reservation signal is common to all UEs. A reservation can be any useful signal such as transmission of DMRS or SRS.

For some embodiments, a gap (e.g., one symbol) between multiple UL subframes may be skipped if the same UEs may be scheduled over multiple contiguous uplink subframes. A UE may skip an additional LBT after its first PUSCH transmission and may continue to transmit in its second uplink subframe. An eNB may explicitly indicate whether UL LBT may be skipped between UL subframes.

In some embodiments, if multiple users are scheduled for UL transmission, a UL LBT gap may be employed in all UL subframes. This may advantageously increase opportunities for UEs to start transmission in the middle of contiguously scheduled subframes, if a UE failed to complete LBT before the contiguous scheduled subframes.

In some embodiments, if a single user is scheduled in the contiguous uplink subframes, and if no ePUCCH is present from other UEs, a UE may skip LBT in the subsequent subframes without an explicit indication from the eNB.

For some embodiments, an eNB may explicitly indicate whether a UE should perform LBT and/or whether the symbol should to be punctured for an LBT gap for each of the scheduled UL subframes. In some embodiments, a one-bit indication may be transmitted via UL grant or via common PDCCH. A first value (e.g., a "1") may be used to indicate that a UE needs to perform LBT and/or puncture a symbol for an LBT gap, while a second value (e.g., a "0") may be used to indicate that the UE does not need to perform LBT and/or symbol puncturing.

In some embodiments, even if the second value is indicated, a UE may override the LBT indication and perform LBT. For example, when a UE has not successfully completed LBT for the transmission of preceding UL subframes, the UE may override an LBT indication from an eNB and may instead perform LBT.

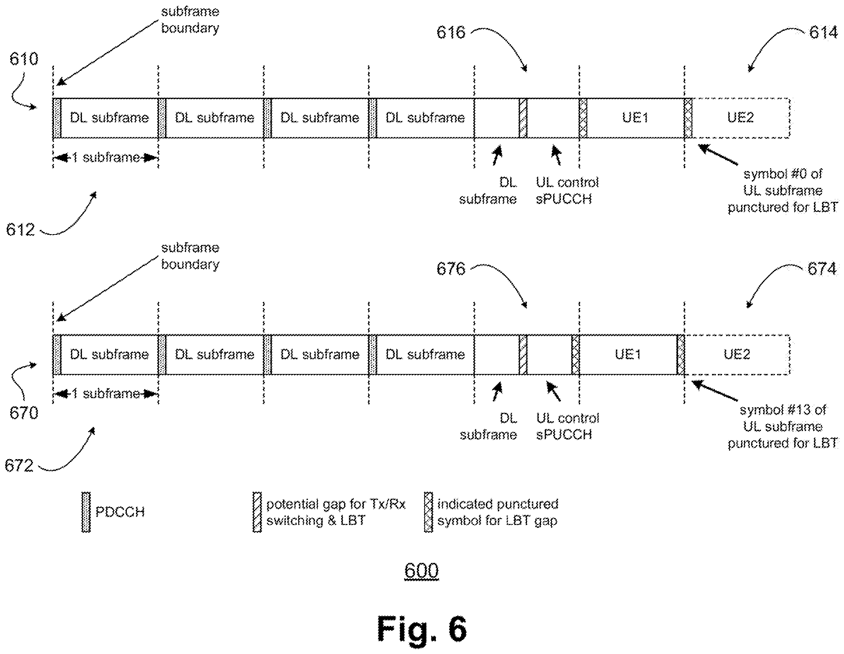

**Fig. 6** illustrates a scenario of various cases of UL LBT, in accordance with some embodiments of the disclosure. A scenario 600 may comprise a first case 610 and a second case 670. In first case 610, an initial symbol (e.g., a symbol number 0) of a subframe scheduled for a UE for UL transmission (for, e.g., PUSCH transmission) is punctured for LBT. In second case 670 not covered by the claims, a last symbol (e.g., a symbol number 13) of a subframe previous to a subframe for a UE for UL transmission (for, e.g., PUSCH transmission) may be punctured for LBT.

First case 610 may comprise a set of DL subframes 612 (which may be transmitted by an eNB), a set of UL subframes 614 (which may be transmitted by one or more UEs), and a transition period 616 between DL subframes 612 and UL subframes 614. DL subframes 612 may carry PDCCH. Transition period 616 may comprise at least a portion of a DL subframe, followed by a potential gap for switching between transmission and reception and/or for LBT, followed by an sPUCCH (which may carry UL control).

Second case 670 may comprise a set of DL subframes 672 (which may be transmitted by an eNB), a set of UL subframes 674 (which may be transmitted by one or more UEs), and a transition period 676 between DL subframes 672 and UL subframes 674. DL subframes 672 may carry PDCCH. Transition period 676 may comprise at least a portion of a DL subframe, followed by a potential gap for switching between transmission and reception and/or for LBT, followed by an sPUCCH (which may carry UL control).

Accordingly, for PUSCH transmissions, particular symbols may be predetermined for performing UL LBT. According to the invention, an initial symbol (e.g., symbol number 0) of a current UL subframe is punctured for UL LBT gap. For some embodiments not covered by the claims, a last symbol (e.g., symbol number 13) of a previous subframe may be punctured.

According to the invention, when an initial symbol is punctured and when contiguous subframes are scheduled to the same UE, an eNB provides an indication to only puncture the first subframe of these contiguous subframes for LBT. If an LBT at a first subframe fails, an eNB cannot know *a priori* whether the following subframes are punctured or not. An eNB may employ blind detection, which may increase complexity. For some embodiments, a UE may indicate the start of a UL subframe via modifying DMRS to depend on a starting position of the PUSCH transmission.

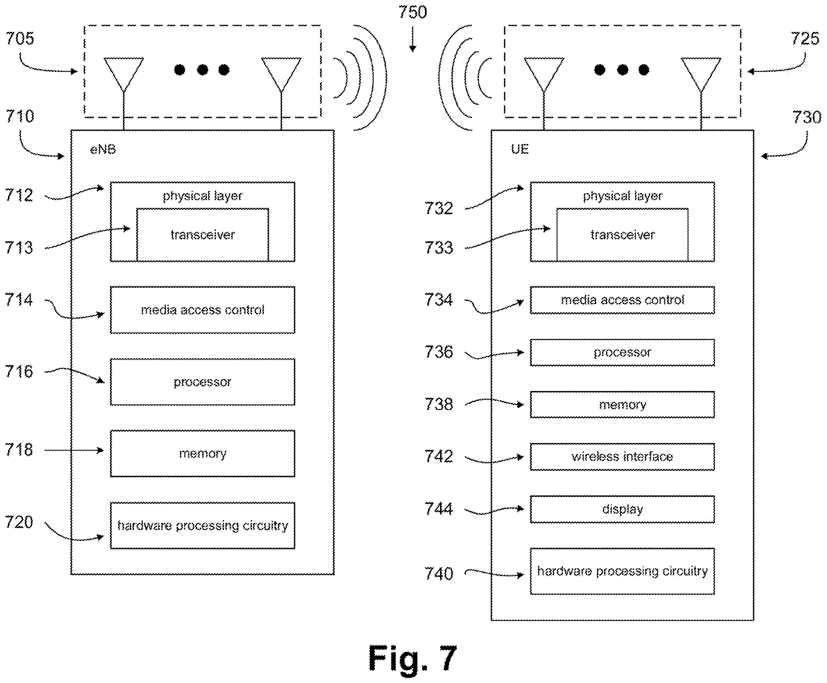

**Fig. 7** illustrates an eNB and a UE, in accordance with some embodiments of the disclosure. **Fig. 7** includes block diagrams of an eNB 710 and a UE 730 which are operable to co-exist with each other and other elements of an LTE network. High-level, simplified architectures of eNB 710 and UE 730 are described so as not to obscure the embodiments. It should be noted that in some embodiments, eNB 710 may be a stationary non-mobile device.

eNB 710 is coupled to one or more antennas 705, and UE 730 is similarly coupled to one or more antennas 725. However, in some embodiments, eNB 710 may incorporate or comprise antennas 705, and UE 730 in various embodiments may incorporate or comprise antennas 725.

In some embodiments, antennas 705 and/or antennas 725 may comprise one or more directional or omni-directional antennas, including monopole antennas, dipole antennas, loop antennas, patch antennas, microstrip antennas, coplanar wave antennas, or other types of antennas suitable for transmission of RF signals. In some MIMO (multiple-input and multiple output) embodiments, antennas 705 are separated to take advantage of spatial diversity.

eNB 710 and UE 730 are operable to communicate with each other on a network, such as a wireless network. eNB 710 and UE 730 may be in communication with each other over a wireless communication channel 750, which has both a downlink path from eNB 710 to UE 730 and an uplink path from UE 730 to eNB 710.

As illustrated in **Fig. 7****,** in some embodiments, eNB 710 may include a physical layer circuitry 712, a MAC (media access control) circuitry 714, a processor 716, a memory 718, and a hardware processing circuitry 720. A person skilled in the art will appreciate that other components not shown may be used in addition to the components shown to form a complete eNB.

In some embodiments, physical layer circuitry 712 includes a transceiver 713 for providing signals to and from UE 730. Transceiver 713 provides signals to and from UEs or other devices using one or more antennas 705. In some embodiments, MAC circuitry 714 controls access to the wireless medium. Memory 718 may be, or may include, a storage media/medium such as a magnetic storage media (e.g., magnetic tapes or magnetic disks), an optical storage media (e.g., optical discs), an electronic storage media (e.g., conventional hard disk drives, solid-state disk drives, or flash-memory-based storage media), or any tangible storage media or non-transitory storage media. Hardware processing circuitry 720 may comprise logic devices or circuitry to perform various operations. In some embodiments, processor 716 and memory 718 are arranged to perform the operations of hardware processing circuitry 720, such as operations described herein with reference to logic devices and circuitry within eNB 710 and/or hardware processing circuitry 720.

Accordingly, in some embodiments, eNB 710 may be a device comprising an application processor, a memory, one or more antenna ports, and an interface for allowing the application processor to communicate with another device.

As is also illustrated in **Fig. 7****,** in some embodiments, UE 730 may include a physical layer circuitry 732, a MAC circuitry 734, a processor 736, a memory 738, a hardware processing circuitry 740, a wireless interface 742, and a display 744. A person skilled in the art would appreciate that other components not shown may be used in addition to the components shown to form a complete UE.

In some embodiments, physical layer circuitry 732 includes a transceiver 733 for providing signals to and from eNB 710 (as well as other eNBs). Transceiver 733 provides signals to and from eNBs or other devices using one or more antennas 725. In some embodiments, MAC circuitry 734 controls access to the wireless medium. Memory 738 may be, or may include, a storage media'medium such as a magnetic storage media (e.g., magnetic tapes or magnetic disks), an optical storage media (e.g., optical discs), an electronic storage media (e.g., conventional hard disk drives, solid-state disk drives, or flash-memory-based storage media), or any tangible storage media or non-transitory storage media. Wireless interface 742 may be arranged to allow the processor to communicate with another device. Display 744 may provide a visual and/or tactile display for a user to interact with UE 730, such as a touch-screen display. Hardware processing circuitry 740 may comprise logic devices or circuitry to perform various operations. In some embodiments, processor 736 and memory 738 may be arranged to perform the operations of hardware processing circuitry 740, such as operations described herein with reference to logic devices and circuitry within UE 730 and/or hardware processing circuitry 740.

Accordingly, in some embodiments, UE 730 may be a device comprising an application processor, a memory, one or more antennas, a wireless interface for allowing the application processor to communicate with another device, and a touch-screen display.

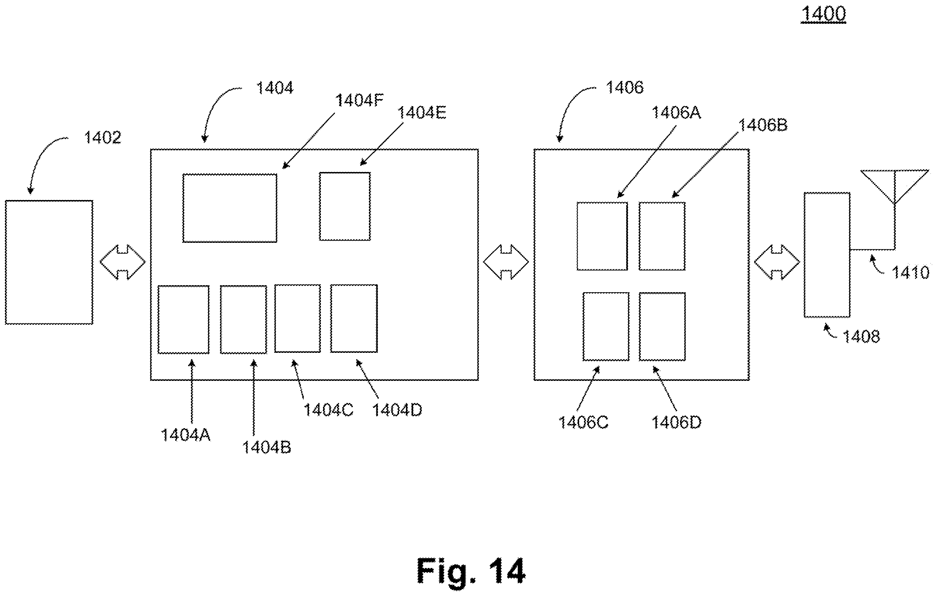

Elements of **Fig. 7****,** and elements of other figures having the same names or reference numbers, can operate or function in the manner described herein with respect to any such figures (although the operation and function of such elements is not limited to such descriptions). For example, **Fig. 14** also depicts embodiments of eNBs, hardware processing circuitry of eNBs, UEs, and/or hardware processing circuitry of UEs, and the embodiments described with respect to **Fig. 7** and **Fig. 14** can operate or function in the manner described herein with respect to any of the figures.

In addition, although eNB 710 and UE 730 are each described as having several separate functional elements, one or more of the functional elements may be combined and may be implemented by combinations of software-configured elements and/or other hardware elements. In some embodiments of this disclosure, the functional elements can refer to one or more processes operating on one or more processing elements. Examples of software and/or hardware configured elements include Digital Signal Processors (DSPs), one or more microprocessors, DSPs, Field-Programmable Gate Arrays (FPGAs), Application Specific Integrated Circuits (ASICs), Radio-Frequency Integrated Circuits (RFICs), and so on.

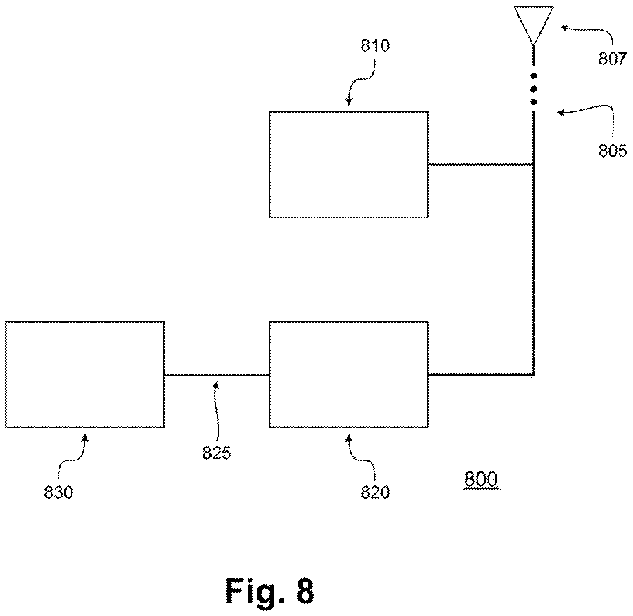

**Fig. 8** illustrates hardware processing circuitries for an eNB for LBT and starting position indication in contiguous UL subframe transmission, in accordance with some embodiments of the disclosure. With reference to **Fig. 7****,** an eNB may include various hardware processing circuitries discussed below (such as hardware processing circuitry 800 of **Fig. 8****),** which may in turn comprise logic devices and/or circuitry operable to perform various operations. For example, in **Fig. 7****,** eNB 710 (or various elements or components therein, such as hardware processing circuitry 720, or combinations of elements or components therein) may include part of, or all of, these hardware processing circuitries.

In some embodiments, one or more devices or circuitries within these hardware processing circuitries may be implemented by combinations of software-configured elements and/or other hardware elements. For example, processor 716 (and/or one or more other processors which eNB 710 may comprise), memory 718, and/or other elements or components of eNB 710 (which may include hardware processing circuitry 720) may be arranged to perform the operations of these hardware processing circuitries, such as operations described herein with reference to devices and circuitry within these hardware processing circuitries. In some embodiments, processor 716 (and/or one or more other processors which eNB 710 may comprise) may be a baseband processor.

Returning to **Fig. 8****,** an apparatus of eNB 710 (or another eNB or base station), which may be operable to communicate with one or more UEs on a wireless network, may comprise hardware processing circuitry 800. In some embodiments, hardware processing circuitry 800 may comprise one or more antenna ports 805 operable to provide various transmissions over a wireless communication channel (such as wireless communication channel 750). Antenna ports 805 may be coupled to one or more antennas 807 (which may be antennas 705). In some embodiments, hardware processing circuitry 800 may incorporate antennas 807, while in other embodiments, hardware processing circuitry 800 may merely be coupled to antennas 807.

Antenna ports 805 and antennas 807 may be operable to provide signals from an eNB to a wireless communications channel and/or a UE, and may be operable to provide signals from a UE and/or a wireless communications channel to an eNB. For example, antenna ports 805 and antennas 807 may be operable to provide transmissions from eNB 710 to wireless communication channel 750 (and from there to UE 730, or to another UE). Similarly, antennas 807 and antenna ports 805 may be operable to provide transmissions from a wireless communication channel 750 (and beyond that, from UE 730, or another UE) to eNB 710.

Hardware processing circuitry 800 may comprise various circuitries operable in accordance with the various embodiments discussed herein. With reference to **Fig. 8****,** hardware processing circuitry 800 may comprise a first circuitry 810, a second circuitry 820, and/or a third circuitry 830. First circuitry 810 may be operable to schedule a plurality of contiguous subframes for the UE for UL transmission. Second circuitry 820 may be operable to determine an initial subframe used by the UE for UL transmission.

In some embodiments, second circuitry 820 may be operable to determine the initial subframe by blind detection through performing a first hypothesis test and a second hypothesis test. For some embodiments, first hypothesis test may be for a starting position at a first symbol and the second hypothesis test may be for a starting position at a second symbol. In some embodiments, third circuitry 830 may be operable to determine the starting position of a received subframe based on a DMRS. Second circuitry 820 may provide the received subframe to third circuitry 830 via an interface 825.

For some embodiments, the DMRS may indicate a symbol of a starting position of the received subframe. In some embodiments, the DMRS may be transmitted in a first symbol of the subframe. For some embodiments, the DMRS may be modulated with a phase shift to carry a one-bit indicator of a starting symbol of the subframe.

In some embodiments, hardware processing circuitry 800 may be coupled to a transceiver circuitry for at least one of: generating transmissions, encoding transmissions, processing transmissions, or decoding transmissions.

In some embodiments, first circuitry 810, second circuitry 820, and/or third circuitry 830 may be implemented as separate circuitries. In other embodiments, first circuitry 810, second circuitry 820, and/or third circuitry 830 may be combined and implemented together in a circuitry without altering the essence of the embodiments.

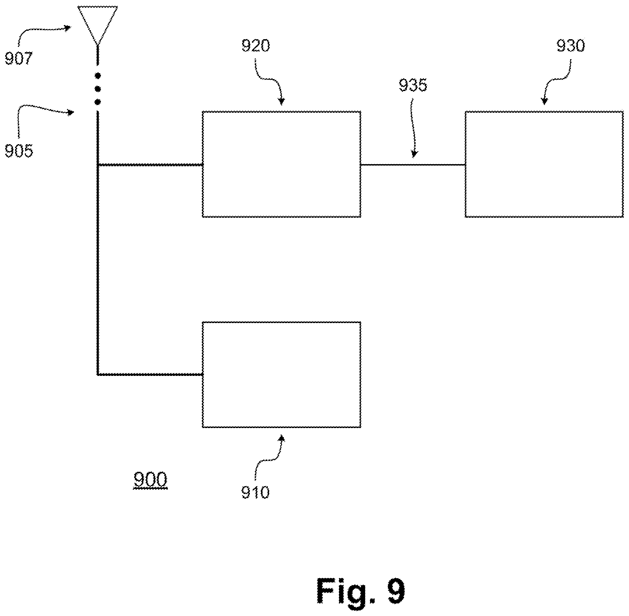

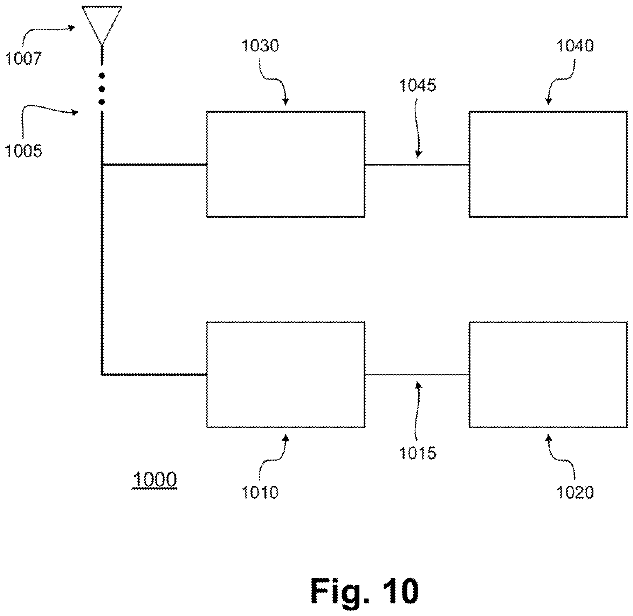

**Fig. 9** illustrates hardware processing circuitries for a UE for LBT and starting position indication in contiguous UL subframe transmission, in accordance with some embodiments of the disclosure. **Fig. 10** illustrates hardware processing circuitries for a UE for channel access for transmission of PUSCH and UL control, in accordance with some embodiments of the disclosure. With reference to **Fig. 7****,** a UE may include various hardware processing circuitries discussed below (such as hardware processing circuitry 900 of **Fig. 9** and hardware processing circuitry 1000 of **Fig. 10****),** which may in turn comprise logic devices and/or circuitry operable to perform various operations. For example, in **Fig. 7****,** UE 730 (or various elements or components therein, such as hardware processing circuitry 740, or combinations of elements or components therein) may include part of, or all of, these hardware processing circuitries.

In some embodiments, one or more devices or circuitries within these hardware processing circuitries may be implemented by combinations of software-configured elements and/or other hardware elements. For example, processor 736 (and/or one or more other processors which UE 730 may comprise), memory 738, and/or other elements or components of UE 730 (which may include hardware processing circuitry 740) may be arranged to perform the operations of these hardware processing circuitries, such as operations described herein with reference to devices and circuitry within these hardware processing circuitries. In some embodiments, processor 736 (and/or one or more other processors which UE 730 may comprise) may be a baseband processor.

Returning to **Fig. 9****,** an apparatus of UE 730 (or another UE or mobile handset), which may be operable to communicate with one or more eNBs on a wireless network, may comprise hardware processing circuitry 900. In some embodiments, hardware processing circuitry 900 may comprise one or more antenna ports 905 operable to provide various transmissions over a wireless communication channel (such as wireless communication channel 750). Antenna ports 905 may be coupled to one or more antennas 907 (which may be antennas 725). In some embodiments, hardware processing circuitry 900 may incorporate antennas 907, while in other embodiments, hardware processing circuitry 900 may merely be coupled to antennas 907.

Antenna ports 905 and antennas 907 may be operable to provide signals from a UE to a wireless communications channel and/or an eNB, and may be operable to provide signals from an eNB and/or a wireless communications channel to a UE. For example, antenna ports 905 and antennas 907 may be operable to provide transmissions from UE 730 to wireless communication channel 750 (and from there to eNB 710, or to another eNB). Similarly, antennas 907 and antenna ports 905 may be operable to provide transmissions from a wireless communication channel 750 (and beyond that, from eNB 710, or another eNB) to UE 730.

Hardware processing circuitry 900 may comprise various circuitries operable in accordance with the various embodiments discussed herein. With reference to **Fig. 9****,** hardware processing circuitry 900 may comprise a first circuitry 910, a second circuitry 920, and/or a third circuitry 930. First circuitry 910 may be operable to identify a first subframe being unavailable for a first LBT procedure within the unlicensed spectrum, in which the first LBT procedure determined the unlicensed spectrum to be busy. Second circuitry 920 may be operable to perform a second LBT procedure in a second subframe subsequent to the first subframe. Third circuitry 930 may be operable to generate an UL transmission over the unlicensed spectrum in the second subframe. Third circuitry may provide information regarding the UL transmission to second circuitry 920 via an interface 935.

In some embodiments, the second subframe may be immediately subsequent to the first subframe. For some embodiments, at least one additional subframe separates the first subframe from the second subframe. In some embodiments, the first subframe and the second subframe may be within a contiguous set of subframes scheduled for the UE. For some embodiments, the second LBT procedure may be performed contrary to at least one of: a no-puncturing indication from the eNB, or a no-LBT indication from the eNB. In some embodiments, the second LBT procedure may be performed when an LBT for a previous UL subframe has determined the unlicensed spectrum to be busy.

For some embodiments, the UE may perform the second LBT procedure within an initial symbol following a subframe boundary. In some embodiments, the UE may wait until one symbol before a following subframe boundary to perform the second LBT procedure. For some embodiments, third circuitry 930 may be operable to generate, for transmission within a duration between a successful LBT procedure and a following subframe boundary, one of: a reservation signal, a SRS, or a DMRS.

In some embodiments, hardware processing circuitry 900 may be coupled to a transceiver circuitry for performing a sensing for an LBT procedure.

In some embodiments, first circuitry 910, second circuitry 920, and/or third circuitry 930 may be implemented as separate circuitries. In other embodiments, first circuitry 910, second circuitry 920, and third circuitry 930 may be combined and implemented together in a circuitry without altering the essence of the embodiments.

Returning to **Fig. 10****,** an apparatus of UE 730 (or another UE or mobile handset), which may be operable to communicate with one or more eNBs on a wireless network, may comprise hardware processing circuitry 1000. In some embodiments, hardware processing circuitry 1000 may comprise one or more antenna ports 1005 operable to provide various transmissions over a wireless communication channel (such as wireless communication channel 750). Antenna ports 1005 may be coupled to one or more antennas 1007 (which may be antennas 725). In some embodiments, hardware processing circuitry 1000 may incorporate antennas 1007, while in other embodiments, hardware processing circuitry 1000 may merely be coupled to antennas 1007.

Antenna ports 1005 and antennas 1007 may be operable to provide signals from a UE to a wireless communications channel and/or an eNB, and may be operable to provide signals from an eNB and/or a wireless communications channel to a UE. For example, antenna ports 1005 and antennas 1007 may be operable to provide transmissions from UE 730 to wireless communication channel 750 (and from there to eNB 710, or to another eNB). Similarly, antennas 1007 and antenna ports 1005 may be operable to provide transmissions from a wireless communication channel 750 (and beyond that, from eNB 710, or another eNB) to UE 730.

Hardware processing circuitry 1000 may comprise various circuitries operable in accordance with the various embodiments discussed herein. With reference to **Fig. 10****,** hardware processing circuitry 1000 may comprise a first circuitry 1010, a second circuitry 1020, a third circuitry 1030, and/or a fourth circuitry 1040. First circuitry 1010 may be operable to sense the unlicensed spectrum before a subframe corresponding to a scheduled PUSCH transmission by the UE, the PUSCH transmission spanning an ending portion of a subframe. Second circuitry 1020 may be operable to perform an LBT procedure to determine whether the unlicensed spectrum is idle. First circuitry 1010 may be operable to provide an interface to the unlicensed spectrum to second circuitry 1020 via an interface 1015. Third circuitry 1030 may generate the scheduled PUSCH transmission if the unlicensed spectrum is determined to be idle. Fourth circuitry 1040 may defer the scheduled PUSCH during the corresponding subframe if the unlicensed spectrum is determined to be busy. Fourth circuitry 1040 may be operable to provide information regarding the deferral to third circuitry 1030 via an interface 1045.

In some embodiments, third circuitry 1030 may be operable to generate an sPUCCH for an ending portion of a subframe prior to the subframe scheduled for the PUSCH transmission. For some embodiments, the ending portion may span a number of symbols immediately prior to an end of a subframe, the number of symbols being one of: one symbol, two symbols, three symbols, or four symbols.

For some embodiments, third circuitry 1030 may be operable to generate, during a duration of a SRS transmission, one of: a reservation signal, a SRS, or a DMRS. In some embodiments, the reservation signal may be common to a plurality of UEs. For some embodiments, the SRS may be frequency-multiplexed with the sPUCCH.

In some embodiments, the LBT procedure may be a single-interval LBT procedure. For some embodiments, the LBT procedure may be a Category 4 LBT. In some embodiments, the LBT procedure may perform no LBT based on an indication from the eNB.

For some embodiments, the LBT procedure may be performed in a last symbol of a subframe before the subframe scheduled for PUSCH transmission. In some embodiments, the LBT procedure may be performed in a first symbol of the subframe scheduled for PUSCH transmission. For some embodiments, second circuitry 1020 may be operable to process an indication from the eNB to do one of: perform the LBT procedure for the scheduled PUSCH, or puncture at least one symbol for an LBT gap for the scheduled PUSCH.

In some embodiments, the indication may be carried within one of: a UL grant, or a PDCCH. For some embodiments, the LBT procedure may be performed without consideration of the indication following a determination that the unlicensed spectrum was busy based upon a previous LBT procedure.

In some embodiments, hardware processing circuitry 1000 may be coupled to a transceiver circuitry for performing the sensing.

In some embodiments, first circuitry 1010, second circuitry 1020, third circuitry 1030, and/or fourth circuitry 1040 may be implemented as separate circuitries. In other embodiments, first circuitry 1010, second circuitry 1020, third circuitry 1030, and fourth circuitry 1040 may be combined and implemented together in a circuitry without altering the essence of the embodiments.

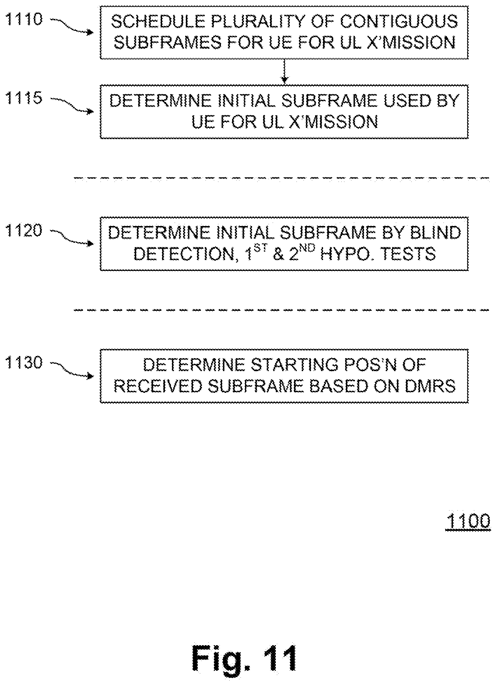

**Fig. 11** illustrates methods for an eNB for LBT and starting position indication in contiguous UL subframe transmission, in accordance with some embodiments of the disclosure. With reference to **Fig. 7****,** various methods that may relate to eNB 710 and hardware processing circuitry 720 are discussed below. Although the actions in method 1100 of **Fig. 11** are shown in a particular order, the order of the actions can be modified. Thus, the illustrated embodiments can be performed in a different order, and some actions may be performed in parallel. Some of the actions and/or operations listed in **Fig. 11** are optional in accordance with certain embodiments. The numbering of the actions presented is for the sake of clarity and is not intended to prescribe an order of operations in which the various actions must occur. Additionally, operations from the various flows may be utilized in a variety of combinations.

Moreover, in some embodiments, machine readable storage media may have executable instructions that, when executed, cause eNB 710 and/or hardware processing circuitry 720 to perform an operation comprising the methods of **Fig. 11****.** Such machine readable storage media may include any of a variety of storage media, like magnetic storage media (e.g., magnetic tapes or magnetic disks), optical storage media (e.g., optical discs), electronic storage media (e.g., conventional hard disk drives, solid-state disk drives, or flash-memory-based storage media), or any other tangible storage media or non-transitory storage media.

In some embodiments, an apparatus may comprise means for performing various actions and/or operations of the methods of **Fig. 11****.**

Returning to **Fig. 11****,** various methods may be in accordance with the various embodiments discussed herein. A method 1100 may comprise a scheduling 1110 and/or a determining 1115. Method 1100 may also comprise a determining 1120 and/or a determining 1130. In scheduling 1110, a plurality of contiguous subframes may be scheduled for a UE for UL transmission. In determining 1115, an initial subframe used by the UE for UL transmission may be determined.

In determining 1120, the initial subframe may be determined by blind detection through performing a first hypothesis test and a second hypothesis test. In some embodiments, the first hypothesis test may be for a starting position at a first symbol and the second hypothesis test may be for a starting position at a second symbol. In determining 1130, the starting position of a received subframe may be determined based on a DMRS.

For some embodiments, the DMRS may indicate a symbol of a starting position of the received subframe. In some embodiments, the DMRS may be transmitted in a first symbol of the subframe. For some embodiments, the DMRS may be modulated with a phase shift to carry a one-bit indicator of a starting symbol of the subframe.

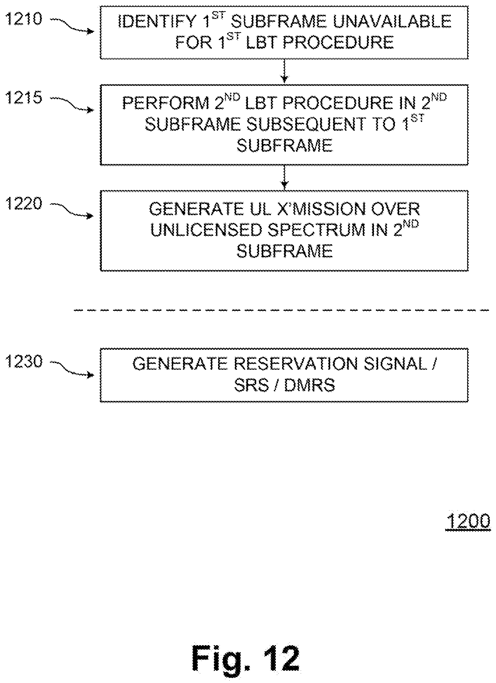

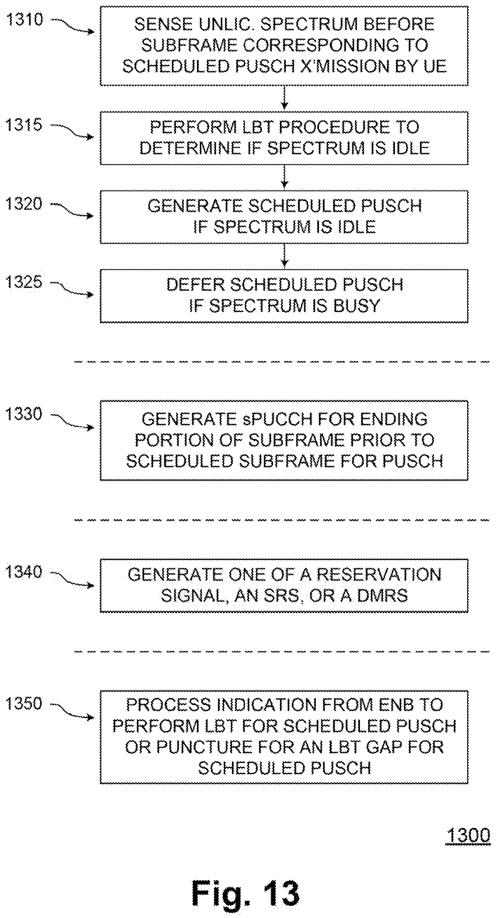

**Fig. 12** illustrates methods for a UE for LBT and starting position indication in contiguous UL subframe transmission, in accordance with some embodiments of the disclosure. **Fig. 13** illustrates methods for a UE for channel access for transmission of PUSCH and UL control, in accordance with some embodiments of the disclosure. With reference to **Fig. 7****,** methods that may relate to UE 730 and hardware processing circuitry 740 are discussed below. Although the actions in the methods 1200 and 1300 of **Figs. 12** **and** **13** are shown in a particular order, the order of the actions can be modified. Thus, the illustrated embodiments can be performed in a different order, and some actions may be performed in parallel. Some of the actions and/or operations listed in **Figs. 12-13** are optional in accordance with certain embodiments. The numbering of the actions presented is for the sake of clarity and is not intended to prescribe an order of operations in which the various actions must occur. Additionally, operations from the various flows may be utilized in a variety of combinations.

Moreover, in some embodiments, machine readable storage media may have executable instructions that, when executed, cause UE 730 and/or hardware processing circuitry 740 to perform an operation comprising the methods of **Figs. 12** **and** **13****.** Such machine readable storage media may include any of a variety of storage media, like magnetic storage media (e.g., magnetic tapes or magnetic disks), optical storage media (e.g., optical discs), electronic storage media (e.g., conventional hard disk drives, solid-state disk drives, or flash-memory-based storage media), or any other tangible storage media or non-transitory storage media.

In some embodiments, an apparatus may comprise means for performing various actions and/or operations of the methods of **Figs. 12-13****.**

Returning to **Fig. 12****,** various methods may be in accordance with the various embodiments discussed herein. A method 1200 may comprise an identifying 1210, a performing 1215, and/or a generating 1220. Method 1200 may also comprise a generating 1230. In identifying 1210, a first subframe may be identified as being unavailable for a first Listen-Before-Talk (LBT) procedure within the unlicensed spectrum, in which the first LBT procedure determined the unlicensed spectrum to be busy. In performing 1215, a second LBT procedure may be performed in a second subframe subsequent to the first subframe. In generating 1220, a UL transmission may be generated over the unlicensed spectrum in the second subframe.

In some embodiments, the second subframe may be immediately subsequent to the first subframe. For some embodiments, at least one additional subframe may separate the first subframe from the second subframe. In some embodiments, the first subframe and the second subframe may be within a contiguous set of subframes scheduled for the UE.

For some embodiments, the second LBT procedure may be performed contrary to at least one of: a no-puncturing indication from an eNB, or a no-LBT indication from the eNB. In some embodiments, the second LBT procedure may be performed when an LBT for a previous UL subframe has determined the unlicensed spectrum to be busy. For some embodiments, the UE may perform the second LBT procedure within an initial symbol following a subframe boundary.

In some embodiments, the UE may wait until one symbol before a following subframe boundary to perform the second LBT procedure. For some embodiments, in generating 1230, one of a reservation signal, a SRS, or a DMRS may be generated for transmission within a duration between a successful LBT procedure and a following subframe boundary.

Returning to **Fig. 13****,** various methods may be in accordance with the various embodiments discussed herein. A method 1300 may comprise a sensing 1310, a performing 1315, a generating 1320, and/or a deferring 1325. Method 1300 may also comprise a generating 1330, a generating 1340, and/or a processing 1350.

In sensing 1310, the unlicensed spectrum may be sensed before a subframe corresponding to a scheduled PUSCH transmission by the UE, the PUSCH transmission spanning an ending portion of a subframe. In performing 1315, an LBT procedure may be performed to determine whether the unlicensed spectrum is idle. In generating 1320, the scheduled PUSCH transmission may be generated if the unlicensed spectrum is determined to be idle. In deferring 1325, the scheduled PUSCH may be deferred during the corresponding subframe if the unlicensed spectrum is determined to be busy.

In generating 1330, an sPUCCH may be generated for an ending portion of a subframe prior to the subframe scheduled for the PUSCH transmission. In some embodiments, the ending portion may span a number of symbols immediately prior to an end of a subframe, the number of symbols being one of: one symbol, two symbols, three symbols, or four symbols.

In generating 1340, during a duration of a SRS transmission, one of a reservation signal, a SRS, or a DMRS may be generated. In some embodiments, the reservation signal may be common to a plurality of UEs. For some embodiments, the SRS may be frequency-multiplexed with the sPUCCH. In some embodiments, the LBT procedure may be a single-interval LBT procedure. For some embodiments, the LBT procedure may be a Category 4 LBT. In some embodiments, the LBT procedure may perform no LBT based on an indication from the eNB. For some embodiments, the LBT procedure may be performed in a last symbol of a subframe before the subframe scheduled for PUSCH transmission. In some embodiments, the LBT procedure may be performed in a first symbol of the subframe scheduled for PUSCH transmission.

In processing 1350, an indication from an eNB to do one of performing the LBT procedure for the scheduled PUSCH, or puncturing at least one symbol for an LBT gap for the scheduled PUSCH may be processed. In some embodiments, the indication may be carried within one of: a UL grant, or a PDCCH. For some embodiments, the LBT procedure may be performed without consideration of the indication following a determination that the unlicensed spectrum was busy based upon a previous LBT procedure.

**Fig. 14** illustrates example components of a UE device, in accordance with some embodiments of the disclosure. In some embodiments, a UE device 1400 may include application circuitry 1402, baseband circuitry 1404, Radio Frequency (RF) circuitry 1406, front-end module (FEM) circuitry 1408, a low-power wake-up receiver (LP-WUR), and one or more antennas 1410, coupled together at least as shown. In some embodiments, the UE device 1400 may include additional elements such as, for example, memory/storage, display, camera, sensor, and/or input/output (I/O) interface.

The application circuitry 1402 may include one or more application processors. For example, the application circuitry 1402 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 1404 may include circuitry such as, but not limited to, one or more single-core or multi-core processors. The baseband circuitry 1404 may include one or more baseband processors and/or control logic to process baseband signals received from a receive signal path of the RF circuitry 1406 and to generate baseband signals for a transmit signal path of the RF circuitry 1406. Baseband processing circuity 1404 may interface with the application circuitry 1402 for generation and processing of the baseband signals and for controlling operations of the RF circuitry 1406. For example, in some embodiments, the baseband circuitry 1404 may include a second generation (2G) baseband processor 1404A, third generation (3G) baseband processor 1404B, fourth generation (4G) baseband processor 1404C, and/or other baseband processor(s) 1404D for other existing generations, generations in development or to be developed in the future (e.g., fifth generation (5G), 6G, etc.). The baseband circuitry 1404 (e.g., one or more of baseband processors 1404A-D) may handle various radio control functions that enable communication with one or more radio networks via the RF circuitry 1406. The radio control functions may include, but are not limited to, signal modulation/demodulation, encoding/decoding, radio frequency shifting, etc. In some embodiments, modulation/demodulation circuitry of the baseband circuitry 1404 may include Fast-Fourier Transform (FFT), precoding, and/or constellation mapping/demapping functionality. In some embodiments, encoding/decoding circuitry of the baseband circuitry 1404 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1404 may include elements of a protocol stack such as, for example, elements of an EUTRAN protocol including, for example, physical (PHY), media access control (MAC), radio link control (RLC), packet data convergence protocol (PDCP), and/or RRC elements. A central processing unit (CPU) 1404E of the baseband circuitry 1404 may be configured to run elements of the protocol stack for signaling of the PHY, MAC, RLC, PDCP and/or RRC layers. In some embodiments, the baseband circuitry may include one or more audio digital signal processor(s) (DSP) 1404F. The audio DSP(s) 1404F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1404 and the application circuitry 1402 may be implemented together such as, for example, on a system on a chip (SOC).

In some embodiments, the baseband circuitry 1404 may provide for communication compatible with one or more radio technologies. For example, in some embodiments, the baseband circuitry 1404 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1404 is configured to support radio communications of more than one wireless protocol may be referred to as multi-mode baseband circuitry.

RF circuitry 1406 may enable communication with wireless networks using modulated electromagnetic radiation through a non-solid medium. In various embodiments, the RF circuitry 1406 may include switches, filters, amplifiers, etc. to facilitate the communication with the wireless network. RF circuitry 1406 may include a receive signal path which may include circuitry to down-convert RF signals received from the FEM circuitry 1408 and provide baseband signals to the baseband circuitry 1404. RF circuitry 1406 may also include a transmit signal path which may include circuitry to up-convert baseband signals provided by the baseband circuitry 1404 and provide RF output signals to the FEM circuitry 1408 for transmission.

In some embodiments, the RF circuitry 1406 may include a receive signal path and a transmit signal path. The receive signal path of the RF circuitry 1406 may include mixer circuitry 1406A, amplifier circuitry 1406B and filter circuitry 1406C. The transmit signal path of the RF circuitry 1406 may include filter circuitry 1406C and mixer circuitry 1406A. RF circuitry 1406 may also include synthesizer circuitry 1406D for synthesizing a frequency for use by the mixer circuitry 1406A of the receive signal path and the transmit signal path. In some embodiments, the mixer circuitry 1406A of the receive signal path may be configured to down-convert RF signals received from the FEM circuitry 1408 based on the synthesized frequency provided by synthesizer circuitry 1406D. The amplifier circuitry 1406B may be configured to amplify the down-converted signals and the filter circuitry 1406C may be a low-pass filter (LPF) or band-pass filter (BPF) configured to remove unwanted signals from the down-converted signals to generate output baseband signals. Output baseband signals may be provided to the baseband circuitry 1404 for further processing. In some embodiments, the output baseband signals may be zero-frequency baseband signals, although this is not a requirement. In some embodiments, mixer circuitry 1406A of the receive signal path may comprise passive mixers, although the scope of the embodiments is not limited in this respect.

In some embodiments, the mixer circuitry 1406A of the transmit signal path may be configured to up-convert input baseband signals based on the synthesized frequency provided by the synthesizer circuitry 1406D to generate RF output signals for the FEM circuitry 1408. The baseband signals may be provided by the baseband circuitry 1404 and may be filtered by filter circuitry 1406C. The filter circuitry 1406C may include a low-pass filter (LPF), although the scope of the embodiments is not limited in this respect.

In some embodiments, the mixer circuitry 1406A of the receive signal path and the mixer circuitry 1406A of the transmit signal path may include two or more mixers and may be arranged for quadrature down-conversion and/or up-conversion respectively. In some embodiments, the mixer circuitry 1406A of the receive signal path and the mixer circuitry 1406A of the transmit signal path may include two or more mixers and may be arranged for image rejection (e.g., Hartley image rejection). In some embodiments, the mixer circuitry 1406A of the receive signal path and the mixer circuitry 1406A may be arranged for direct down-conversion and/or direct up-conversion, respectively. In some embodiments, the mixer circuitry 1406A of the receive signal path and the mixer circuitry 1406A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1406 may include analog-to-digital converter (ADC) and digital-to-analog converter (DAC) circuitry and the baseband circuitry 1404 may include a digital baseband interface to communicate with the RF circuitry 1406.

In some dual-mode embodiments, a separate radio IC circuitry may be provided for processing signals for each spectrum, although the scope of the embodiments is not limited in this respect.

In some embodiments, the synthesizer circuitry 1406D may be a fractional-N synthesizer or a fractional N/N+1 synthesizer, although the scope of the embodiments is not limited in this respect as other types of frequency synthesizers may be suitable. For example, synthesizer circuitry 1406D may be a delta-sigma synthesizer, a frequency multiplier, or a synthesizer comprising a phase-locked loop with a frequency divider.

The synthesizer circuitry 1406D may be configured to synthesize an output frequency for use by the mixer circuitry 1406A of the RF circuitry 1406 based on a frequency input and a divider control input. In some embodiments, the synthesizer circuitry 1406D may be a fractional N/N+1 synthesizer.

In some embodiments, frequency input may be provided by a voltage controlled oscillator (VCO), although that is not a requirement. Divider control input may be provided by either the baseband circuitry 1404 or the applications processor 1402 depending on the desired output frequency. In some embodiments, a divider control input (e.g., N) may be determined from a look-up table based on a channel indicated by the applications processor 1402.

Synthesizer circuitry 1406D of the RF circuitry 1406 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1406D may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1406 may include an IQ/polar converter.

FEM circuitry 1408 may include a receive signal path which may include circuitry configured to operate on RF signals received from one or more antennas 1410, amplify the received signals and provide the amplified versions of the received signals to the RF circuitry 1406 for further processing. FEM circuitry 1408 may also include a transmit signal path which may include circuitry configured to amplify signals for transmission provided by the RF circuitry 1406 for transmission by one or more of the one or more antennas 1410.

In some embodiments, the FEM circuitry 1408 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1406). The transmit signal path of the FEM circuitry 1408 may include a power amplifier (PA) to amplify input RF signals (e.g., provided by RF circuitry 1406), and one or more filters to generate RF signals for subsequent transmission (e.g., by one or more of the one or more antennas 1410.

In some embodiments, the UE 1400 comprises a plurality of power saving mechanisms. If the UE 1400 is in an RRC_Connected state, where it is still connected to the eNB as it expects to receive traffic shortly, then it may enter a state known as Discontinuous Reception Mode (DRX) after a period of inactivity. During this state, the device may power down for brief intervals of time and thus save power.

If there is no data traffic activity for an extended period of time, then the UE 1400 may transition off to an RRC_Idle state, where it disconnects from the network and does not perform operations such as channel quality feedback, handover, etc. The UE 1400 goes into a very low power state and it performs paging where again it periodically wakes up to listen to the network and then powers down again. Since the device might not receive data in this state, in order to receive data, it should transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

In addition, in various embodiments, an eNB device may include components substantially similar to one or more of the example components of UE device 1400 described herein.

It is pointed out that elements of any of the Figures herein having the same reference numbers and/or names as elements of any other Figure herein may, in various embodiments, operate or function in a manner similar those elements of the other Figure (without being limited to operating or functioning in such a manner).

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional element.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. For example, other memory architectures e.g., Dynamic RAM (DRAM) may use the embodiments

In addition, well known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

## Claims

1. An apparatus of an Evolved Node-B, eNB, (710) operable to communicate with a User Equipment, UE, (730) over an unlicensed spectrum on a wireless network, comprising:
a memory; and
one or more processors to:
schedule a plurality of contiguous subframes for the UE (730) for Uplink, UL, transmission, and
determine a first subframe to be used by the UE (730) for UL transmission,
**characterized in that**
the eNB (710) indicates to only puncture the first symbol of the first subframe of the plurality of contiguous subframes for carrying out a Listen-Before-Talk, LBT, procedure during the punctured first symbol.

2. The apparatus of claim 1, wherein the one or more processors are to:
receive a first PUSCH transmission of the plurality of contiguous subframes beginning at the second symbol of the first subframe, and
receive a second PUSCH transmission of the plurality of contiguous subframes beginning at the first symbol of the second subframe.

3. The apparatus of claim 2,
wherein the first PUSCH transmission is received if the LBT procedure by the UE (730) in the first symbol of the first subframe is successful.

4. An eNB device (710) comprising an application processor, a memory, one or more antenna ports, and an interface for allowing the application processor to communicate with another device, the eNB device (710) including the apparatus of any of claims 1 through 3.

5. A method of communication by an Evolved Node-B, eNB, (710) comprising the steps of:
scheduling a plurality of contiguous subframes for a User Equipment, UE, (730) for Uplink, UL, transmission, and
determining a first subframe to be used by the UE (730) for UL transmission,
**characterized in that**
the eNB (710) indicates to only puncture the first symbol of the first subframe of the plurality of contiguous subframes for carrying out a Listen-Before-Talk, LBT, procedure during the punctured first symbol.

6. The method of claim 5, further comprising:
receive a first PUSCH transmission beginning at the second symbol of the first subframe of the plurality of contiguous subframes, and
receive a second PUSCH transmission beginning at the first symbol of the second subframe of the plurality of contiguous subframes.

7. The method of claim 6,
wherein a first PUSCH transmission is received if the LBT procedure by the UE (730) in the first symbol of the first subframe is successful.

8. Machine readable storage media having machine executable instructions stored thereon that, when executed, cause one or more processors to perform a method according to any of claims 5 through 7.

9. An apparatus of a User Equipment, UE, (730) operable to communicate with an Evolved Node-B, eNB, (710) over an unlicensed spectrum on a wireless network, comprising:
a memory; and
one or more processors to:
receive an indication from the eNB (710) indicating to puncture only the first symbol of the first subframe of a plurality of scheduled contiguous subframes for carrying out a Listen-Before-Talk, LBT, procedure during the punctured first symbol;
identify the first subframe being unavailable within the unlicensed spectrum, wherein a first Listen-Before-Talk, LBT, procedure determines the unlicensed spectrum to be busy;
perform a second LBT procedure on the first subframe subsequent to the first LBT procedure; and
transmit a first PUSCH if the second LBT procedure is successful.

10. The apparatus of claim 9,
wherein the first subframe is immediately subsequent to the first LBT procedure.

11. The apparatus of either of claims 9 or 10,
wherein at least one additional subframe separates the first subframe from the second subframe.

12. A UE device (730) comprising an application processor, a memory, one or more antennas, a wireless interface for allowing the application processor to communicate with another device, and a touch-screen display, the UE device (730) including the apparatus of any of claims 9 through 11.

13. A method of communication by a User Equipment, UE, (730) comprising the steps of:
receiving an indication from the eNB (710) indicating to puncture only the first symbol of the first subframe of a plurality of scheduled contiguous subframes for carrying out a Listen-Before-Talk, LBT, procedure during the punctured first symbol;
performing a LBT procedure during the punctured first symbol of the first subframe;
if the LBT procedure during the punctured first symbol of the first subframe is successful, transmitting a PUSCH of the plurality of contiguous subframes beginning at the second symbol of the first subframe to the eNB (710).

14. The method of claim 13,
wherein the first subframe is immediately subsequent to the first LBT procedure.

15. Machine readable storage media having machine executable instructions stored thereon that, when executed, cause one or more processors to perform a method according to any of claims 13 through 14.

## Patentansprüche

1. Vorrichtung eines Evolved Node-B, eNB, (710), die betreibbar ist, um mit einer Benutzervorrichtung, UE, (730) über ein unlizenziertes Spektrum in einem drahtlosen Netzwerk zu kommunizieren, umfassend:
einen Speicher; und
einen oder mehrere Prozessoren zum:
Planen einer Vielzahl von zusammenhängenden Unterrahmen für die UE (730) für Uplink, UL, Übertragung, und
Bestimmen eines ersten Unterrahmens, der von der UE (730) für UL-Übertragung verwendet werden soll,
**dadurch gekennzeichnet, dass**
der eNB (710) anzeigt, nur das erste Symbol des ersten Unterrahmens der Vielzahl von zusammenhängenden Unterrahmen zu punktieren, um eine Listen-Before-Talk, LBT, Prozedur während des punktierten ersten Symbols auszuführen.

2. Vorrichtung nach Anspruch 1, wobei der eine oder die mehreren Prozessoren eingerichtet sind zum:
Empfangen einer ersten PUSCH-Übertragung der Vielzahl von zusammenhängenden Unterrahmen beginnend bei dem zweiten Symbol des ersten Unterrahmens, und
Empfangen einer zweiten PUSCH-Übertragung der Vielzahl von zusammenhängenden Unterrahmen beginnend bei dem ersten Symbol des zweiten Unterrahmens.

3. Vorrichtung nach Anspruch 2,
wobei die erste PUSCH-Übertragung empfangen wird, wenn die LBT-Prozedur durch die UE (730) in dem ersten Symbol des ersten Unterrahmens erfolgreich ist.

4. eNB-Vorrichtung (710), umfassend einen Anwendungsprozessor, einen Speicher, einen oder mehrere Antennenanschlüsse und eine Schnittstelle, um dem Anwendungsprozessor zu ermöglichen, mit einer anderen Vorrichtung zu kommunizieren, wobei die eNB-Vorrichtung (710) die Vorrichtung nach einem der Ansprüche 1 bis 3 beinhaltet.

5. Verfahren zur Kommunikation durch einen Evolved Node-B, eNB, (710), umfassend die folgenden Schritte:
Planen einer Vielzahl von zusammenhängenden Unterrahmen für eine Benutzervorrichtung, UE, (730) für Uplink, UL, Übertragung, und
Bestimmen eines ersten Unterrahmens, der von der UE (730) für UL-Übertragung verwendet werden soll,
**dadurch gekennzeichnet, dass**
der eNB (710) anzeigt, nur das erste Symbol des ersten Unterrahmens der Vielzahl von zusammenhängenden Unterrahmen zu punktieren, um eine Listen-Before-Talk, LBT, Prozedur während des punktierten ersten Symbols auszuführen.

6. Verfahren nach Anspruch 5, ferner umfassend:
Empfangen einer ersten PUSCH-Übertragung beginnend bei dem zweiten Symbol des ersten Unterrahmens der Vielzahl von zusammenhängenden Unterrahmen, und
Empfangen einer zweiten PUSCH-Übertragung beginnend bei dem ersten Symbol des zweiten Unterrahmens der Vielzahl von zusammenhängenden Unterrahmen.

7. Verfahren nach Anspruch 6,
wobei eine erste PUSCH-Übertragung empfangen wird, wenn die LBT-Prozedur durch die UE (730) in dem ersten Symbol des ersten Unterrahmens erfolgreich ist.

8. Maschinenlesbares Speichermedium, auf dem maschinenausführbare Anweisungen gespeichert sind, die bei Ausführung bewirken, dass ein oder mehrere Prozessoren ein Verfahren nach einem der Ansprüche 5 bis 7 durchführen.

9. Vorrichtung einer Benutzervorrichtung, UE, (730), die betreibbar ist, um mit einem Evolved Node-B, eNB, (710) über ein unlizenziertes Spektrum in einem drahtlosen Netzwerk zu kommunizieren, umfassend:
einen Speicher; und
einen oder mehrere Prozessoren zum:
Empfangen einer Anzeige von dem eNB (710), die anzeigt, nur das erste Symbol des ersten Unterrahmens einer Vielzahl von geplanten zusammenhängenden Unterrahmen zu punktieren, um eine Listen-Before-Talk, LBT, Prozedur während des punktierten ersten Symbols auszuführen;
Identifizieren des ersten Unterrahmens, der innerhalb des unlizenzierten Spektrums nicht verfügbar ist, wobei eine erste Listen-Before-Talk, LBT, Prozedur bestimmt, dass das unlizenzierte Spektrum belegt ist;
Durchführen einer zweiten LBT-Prozedur an dem ersten Unterrahmen nach der ersten LBT-Prozedur; und
Übertragen eines ersten PUSCH, wenn die zweite LBT-Prozedur erfolgreich ist.

10. Vorrichtung nach Anspruch 9,
wobei der erste Unterrahmen unmittelbar auf die erste LBT-Prozedur folgt.

11. Vorrichtung nach einem der Ansprüche 9 oder 10,
wobei mindestens ein zusätzlicher Unterrahmen den ersten Unterrahmen von dem zweiten Unterrahmen trennt.

12. UE-Vorrichtung (730), umfassend einen Anwendungsprozessor, einen Speicher, eine oder mehrere Antennen, eine drahtlose Schnittstelle, um dem Anwendungsprozessor zu ermöglichen, mit einer anderen Vorrichtung zu kommunizieren, und eine Touchscreen-Anzeige, wobei die UE-Vorrichtung (730) die Vorrichtung nach einem der Ansprüche 9 bis 11 beinhaltet.

13. Verfahren zur Kommunikation durch eine Benutzervorrichtung, UE, (730), umfassend die folgenden Schritte:
Empfangen einer Anzeige von dem eNB (710), die anzeigt, nur das erste Symbol des ersten Unterrahmens einer Vielzahl von geplanten zusammenhängenden Unterrahmen zu punktieren, um eine Listen-Before-Talk, LBT, Prozedur während des punktierten ersten Symbols auszuführen;
Durchführen einer LBT-Prozedur während des punktierten ersten Symbols des ersten Unterrahmens;
wenn die LBT-Prozedur während des punktierten ersten Symbols des ersten Unterrahmens erfolgreich ist, Übertragen eines PUSCH der Vielzahl von zusammenhängenden Unterrahmen beginnend bei dem zweiten Symbol des ersten Unterrahmens an den eNB (710).

14. Verfahren nach Anspruch 13,
wobei der erste Unterrahmen unmittelbar auf die erste LBT-Prozedur folgt.

15. Maschinenlesbares Speichermedium, auf dem maschinenausführbare Anweisungen gespeichert sind, die bei Ausführung bewirken, dass ein oder mehrere Prozessoren ein Verfahren nach einem der Ansprüche 13 bis 14 durchführen.

## Revendications

1. Un appareil d'un noeud B évolué, eNB, (710) utilisable pour communiquer avec un équipement utilisateur, UE, (730) sur un spectre sans licence sur un réseau sans fil, comprenant :
une mémoire ; et
un ou plusieurs processeurs pour :
planifier une pluralité de sous-trames contiguës pour l'UE (730) pour une transmission de liaison montante, UL, et
déterminer une première sous-trame devant être utilisée par l'UE (730) pour une transmission UL,
**caractérisé en ce que**
l'eNB (710) indique de perforer seulement le premier symbole de la première sous-trame de la pluralité de sous-trames contiguës pour réaliser une procédure d'écoute avant d'émettre, LBT, durant le premier symbole perforé.

2. L'appareil selon la revendication 1, dans lequel les un ou plusieurs processeurs sont adaptés pour :
recevoir une première transmission PUSCH de la pluralité de sous-trames contiguës commençant au niveau du deuxième symbole de la première sous-trame, et
recevoir une deuxième transmission PUSCH de la pluralité de sous-trames contiguës commençant au niveau du premier symbole de la deuxième sous-trame.

3. L'appareil selon la revendication 2,
dans lequel la première transmission PUSCH est reçue si la procédure LBT par l'UE (730) dans le premier symbole de la première sous-trame est réussie.

4. Un dispositif d'eNB (710) comprenant un processeur d'application, une mémoire, un ou plusieurs ports d'antenne et une interface pour permettre au processeur d'application de communiquer avec un autre dispositif, le dispositif d'eNB (710) comportant l'appareil selon l'une des revendications 1 à 3.

5. Un procédé de communication par un noeud B évolué, eNB, (710), comprenant les étapes consistant à :
planifier une pluralité de sous-trames contiguës pour un équipement utilisateur, UE, (730) pour une transmission de liaison montante, UL, et
déterminer une première sous-trame devant être utilisée par l'UE (730) pour une transmission UL,
**caractérisé en ce que**
l'eNB (710) indique de perforer seulement le premier symbole de la première sous-trame de la pluralité de sous-trames contiguës pour réaliser une procédure d'écoute avant d'émettre, LBT, durant le premier symbole perforé.

6. Le procédé selon la revendication 5, comprenant en outre :
la réception d'une première transmission PUSCH de la pluralité de sous-trames contiguës commençant au niveau du deuxième symbole de la première sous-trame, et
la réception d'une deuxième transmission PUSCH de la pluralité de sous-trames contiguës commençant au niveau du premier symbole de la deuxième sous-trame.

7. Le procédé selon la revendication 6,
dans lequel une première transmission PUSCH est reçue si la procédure LBT par l'UE (730) dans le premier symbole de la première sous-trame est réussie.

8. Support de stockage lisible par machine ayant des instructions exécutables par machine stockées dessus qui, quand elles sont exécutées, amènent un ou plusieurs processeurs à réaliser un procédé selon l'une des revendications 5 à 7.

9. Un appareil d'un équipement utilisateur, UE, (730) utilisable pour communiquer avec un noeud B évolué, eNB, (710) sur un spectre sans licence sur un réseau sans fil, comprenant :
une mémoire ; et
un ou plusieurs processeurs pour :
recevoir une indication à partir de l'eNB (710), indiquant de perforer seulement le premier symbole de la première sous-trame d'une pluralité de sous-trames contiguës planifiées pour réaliser une procédure d'écoute avant d'émettre, LBT, durant le premier symbole perforé ;
identifier la première sous-trame qui n'est pas disponible dans le spectre sans licence, dans lequel une première procédure d'écoute avant d'émettre, LBT, détermine le spectre sans licence comme étant occupé ; réaliser une deuxième procédure LBT sur la première sous-trame suivant à la première procédure LBT ; et
transmettre un premier PUSCH si la deuxième procédure LBT est réussie.

10. L'appareil selon la revendication 9,
dans lequel la première sous-trame suit immédiatement la première procédure LBT.

11. L'appareil selon l'une des revendications 9 ou 10, dans lequel au moins une sous-trame supplémentaire sépare la première sous-trame de la deuxième sous-trame.

12. Un dispositif d'UE (730) comprenant un processeur d'application, une mémoire, une ou plusieurs antennes et une interface sans fil pour permettre au processeur d'application de communiquer avec un autre dispositif, et un affichage à écran tactile, le dispositif d'UE (730) comportant l'appareil selon l'une des revendications 9 à 11.

13. Un procédé de communication par un équipement utilisateur, UE, (730), comprenant les étapes consistant à :
recevoir une indication à partir de l'eNB (710), indiquant de perforer seulement le premier symbole de la première sous-trame d'une pluralité de sous-trames contiguës planifiées pour réaliser une procédure d'écoute avant d'émettre, LBT, durant le premier symbole perforé ;
réaliser une procédure LBT durant le premier symbole perforé de la première sous-trame ;
si la procédure LBT durant le premier symbole perforé de la première sous-trame est réussie, transmettre un PUSCH de la pluralité de sous-trames contiguës commençant au niveau du deuxième symbole de la première sous-trame à l'eNB (710) .

14. Le procédé selon la revendication 13,
dans lequel la première sous-trame suit immédiatement la première procédure LBT.

15. Support de stockage lisible par machine ayant des instructions exécutables par machine stockées dessus qui, quand elles sont exécutées, amènent un ou plusieurs processeurs à réaliser un procédé selon l'une des revendications 13 à 14.
